# EUROPEAN PATENT APPLICATION

(11) **EP 4 841 479 A1**
(43) Date of publication of application: **18.11.2026**
(21) Application number: 26178510.9
(22) Date of filing: 13.05.2026
(51) Int. Cl.: G06F 16/955

(54) **INTERFACE ELEMENT ORGANIZATION SERVICE**

(30) Priority: 14.05.2025 US 202563805646 P; 13.04.2026 US 202619646341
(71) Applicant: Apple Inc., Cupertino, CA 95014 (US)
(72) Inventor: SHULTZ, Conrad A., San Jose (US); KAZI, Mahrusuddin, San Jose (US); ZHANG, Yongjun, Sunnyvale (US); GINSBERG, Rachel R., San Francisco (US); TURNER, Kevin W., San Francisco (US); DEMAREST, Remy M., Santa Clara (US); SHUKLA, Ansh, Cupertino (US); MCLAUGHLIN, Kristin, Santa Clara (US); GILLIGAN, Matthew R., San Francisco (US); AITHAL, Sanjana K., Fremont (US); ZHOU, Xianda, Cupertino (US); BARLAS, Berkay, Santa Clara (US); YING, Charles H., San Mateo (US); FEDERIGHI, Craig M., Los Altos (US); DASCOLA, Jonathan R., San Francisco (US); YIN, Luming, San Jose (US); LIU, Samantha, San Diego (US); LEMAY, Stephen O., Palo Alto (US); FALKENBURG, Steven J., Los Altos (US); PANIGRAHI, Tanmoy, San Jose (US); STEVENSON, Trevor, Pacifica (US); BOCANGEL CALDERON, Waynar, San Diego (US)
(74) Representative: COPA Copenhagen Patents

(57) **Abstract**

The present technology addresses these issues by organizing content items by introducing an interface element organization service that groups tabs and windows into collections based on content similarity, and assigns contextual names generated by AI. It also suggests storage locations for saved content, streamlining the organization process by providing recommended folders, even for complex folder structures in file explorers. In some embodiments, the present technology is particularly suited to organizing content within Internet browsers.

## Description

### BACKGROUND

In modern computing environments, users frequently manage numerous open tabs and windows, especially within web browsers, but also across various software applications. This proliferation of tabs and windows can lead to a cluttered interface, making it difficult for users to navigate and locate specific information or tasks efficiently. This challenge is exacerbated when multitasking or when attempting to reference multiple sources concurrently, often resulting in decreased productivity and increased frustration.

Additionally, users often save substantial amounts of internet content through bookmarks, reading lists, and favorites as methods to preserve important information or revisit sites of interest. Over time, these collections can become disorganized and cumbersome to manage.

### BRIEF DESCRIPTION OF THE SEVERAL VIEWS OF THE DRAWINGS

Details of one or more aspects of the subject matter described in this disclosure are set forth in the accompanying drawings and the description below. However, the accompanying drawings illustrate only some typical aspects of this disclosure and are therefore not to be considered limiting of its scope. Other features, aspects, and advantages will become apparent from the description, the drawings and the claims.
FIG. 1 illustrates an example client device that includes an organization service for organizing open content items in a user interface panel and for helping a user account select a storage location for a content item to be saved in accordance with some embodiments of the present technology.
FIG. 2A, FIG. 2B, FIG. 2C, FIG. 2D, FIG. 2E, and FIG. 2F illustrates an example graphical user interface that includes interface elements that can be organized in accordance with some embodiments of the present technology.
FIG. 3A illustrates an example method for grouping interface elements representing content items wherein a second content item is opened as a result of an interaction within a first content item in accordance with some embodiments of the present technology.
FIG. 3B illustrates a similar method for grouping interface elements representing content items, as shown in FIG. 3A, except that the first content item is opened independently in accordance with some embodiments of the present technology.
FIG. 4 illustrates an example method for organizing additional content items as they are opened in accordance with some embodiments of the present technology.
FIG. 5 illustrates an example method for reorganizing exiting groupings of interface elements in accordance with some embodiments of the present technology.
FIG. 6 illustrates an example method for presenting interface elements representing content items open on a second client device to be presented within the grouping of interface elements on a first client device in accordance with some embodiments of the present technology.
FIG. 7 illustrates an example method for providing a suggested storage location to save a content item in accordance with some embodiments of the present technology.
FIG. 8A, FIG. 8B, and FIG. 8C illustrate example save modals in accordance with some embodiments of the present technology.
FIG. 9A and FIG. 9B illustrates an example method for identifying suggested storage locations in accordance with some embodiments of the present technology.
FIG. 10 illustrates an example method for reorganizing the storage locations of content items in accordance with some embodiments of the present technology
FIG. 11A, FIG. 11B, and FIG. 11C illustrates an example transformer architecture in accordance with some embodiments of the present technology.
FIG. 12 is a system diagram illustrating a device in accordance with some embodiments of the present technology.

### DETAILED DESCRIPTION

Various embodiments of the disclosure are discussed in detail below. While specific implementations are discussed, it should be understood that this is done for illustration purposes only. A person skilled in the relevant art will recognize that other components and configurations may be used without parting from the spirit and scope of the disclosure.

Additional features and advantages of the disclosure will be set forth in the description which follows, and in part will be obvious from the description, or can be learned by practice of the herein disclosed principles. The features and advantages of the disclosure can be realized and obtained by means of the instruments and combinations particularly pointed out in the appended claims. These and other features of the disclosure will become more fully apparent from the following description and appended claims, or can be learned by the practice of the principles set forth herein.

In modern computing environments, users frequently manage numerous open tabs and windows, especially within web browsers, but also across various software applications. This proliferation of tabs and windows can lead to a cluttered interface, making it difficult for users to navigate and locate specific information or tasks efficiently. This challenge is exacerbated when multitasking or when attempting to reference multiple sources concurrently, often resulting in decreased productivity and increased frustration.

Additionally, users often save substantial amounts of internet content through bookmarks, reading lists, and favorites as methods to preserve important information or revisit sites of interest. Over time, these collections can become disorganized and cumbersome to manage.

The present technology alleviates the above challenges through an interface element organization service that can be used to organize tabs and windows into collections based on the similarity of the content of the content items represented by the tabs and windows. Further, these collections can be given contextual names using a generative AI service to generate the contextual name from portions of the content items making up the collection.

The present technology can also alleviate challenges in finding a storage location for a content item that is to be saved. Some users have large folder structures - either as part of their organization system for documents in a device file explorer or within an application like an internet browser. When users have a large folder structure, it can be time-consuming to navigate the folder structure to find the correct folder - if the user can even remember which folder is the correct folder. Further, navigating large organization structures is more difficult on devices with smaller displays, such as smartphones or some spatial computing devices like AR glasses.

As described above, one aspect of the present technology is the gathering and use of data available from various sources. The present disclosure contemplates that in some instances, this gathered data may include personal information data that uniquely identifies or can be used to contact or locate a specific person.

The present disclosure contemplates that the entities responsible for the collection, analysis, disclosure, transfer, storage, or other use of such personal information data will comply with well-established privacy policies and/or privacy practices. In particular, such entities should implement and consistently use privacy policies and practices that are generally recognized as meeting or exceeding industry or governmental requirements for maintaining personal information data private and secure. Such policies should be easily accessible by users, and should be updated as the collection and/or use of data changes. Personal information from users should be collected for legitimate and reasonable uses of the entity and not shared or sold outside of those legitimate uses. Further, such collection/sharing should occur after receiving the informed consent of the users. Additionally, such entities should consider taking any needed steps for safeguarding and securing access to such personal information data and ensuring that others with access to the personal information data adhere to their privacy policies and procedures. Further, such entities can subject themselves to evaluation by third parties to certify their adherence to widely accepted privacy policies and practices. In addition, policies and practices should be adapted for the particular types of personal information data being collected and/or accessed and adapted to applicable laws and standards, including jurisdiction-specific considerations. For instance, in the US, collection of or access to certain health data may be governed by federal and/or state laws, such as the Health Insurance Portability and Accountability Act (HIPAA); whereas health data in other countries may be subject to other regulations and policies and should be handled accordingly. Hence different privacy practices should be maintained for different personal data types in each country.

Despite the foregoing, the present disclosure also contemplates embodiments in which users selectively block the use of, or access to, personal information data. That is, the present disclosure contemplates that hardware and/or software elements can be provided to prevent or block access to such personal information data. For example, in the case of advertisement delivery services, the present technology can be configured to allow users to select to "opt in" or "opt out" of participation in the collection of personal information data during registration for services or anytime thereafter. In another example, users can select not to provide mood-associated data for targeted content delivery services. In yet another example, users can select to limit the length of time mood-associated data is maintained or entirely prohibit the development of a baseline mood profile. In addition to providing "opt in" and "opt out" options, the present disclosure contemplates providing notifications relating to the access or use of personal information. For instance, a user may be notified upon downloading an app that their personal information data will be accessed and then reminded again just before personal information data is accessed by the app.

Moreover, it is the intent of the present disclosure that personal information data should be managed and handled in a way to minimize risks of unintentional or unauthorized access or use. Risk can be minimized by limiting the collection of data and deleting data once it is no longer needed. In addition, and when applicable, including in certain health related applications, data de-identification can be used to protect a user's privacy. De-identification may be facilitated, when appropriate, by removing specific identifiers (e.g., date of birth, etc.), controlling the amount or specificity of data stored (e.g., collecting location data a city level rather than at an address level), controlling how data is stored (e.g., aggregating data across users), and/or other methods.

Therefore, although the present disclosure broadly covers use of personal information data to implement one or more various disclosed embodiments, the present disclosure also contemplates that the various embodiments can also be implemented without the need for accessing such personal information data. That is, the various embodiments of the present technology are not rendered inoperable due to the lack of all or a portion of such personal information data. For example, content can be selected and delivered to users by inferring preferences based on non-personal information data or a bare minimum amount of personal information, such as the content being requested by the device associated with a user, other non-personal information available to the content delivery services, or publicly available information.

Despite the foregoing, the present disclosure also contemplates embodiments in which users selectively restrict and/or block the use of and/or access to data. That is, the present disclosure contemplates that hardware and/or software elements can be provided to prevent or block access to data. For example, in the case of some services, the present technology should be configured to allow users to select to "opt in" or "opt out" of participation in the collection of data during registration for services or anytime thereafter. In another example, the present technology should be configured to allow users to select not to provide certain data for training the AI/ML systems and/or for use as input during the inference stage of such systems. In yet another example, the present technology should be configured to allow users to be able to select to limit the length of time data is maintained or entirely prohibit the use of their data for use by the AI/ML systems. In addition to providing "opt in" and "opt out" options, the present disclosure contemplates providing notifications relating to the access or use of personal information. For instance, a user can be notified when their data is being input into the AI/ML systems for training or inference purposes, and/or reminded when the AI/ML systems generate outputs or make decisions based on their data.

The present disclosure recognizes AI/ML systems should incorporate explicit restrictions and/or oversight to mitigate against risks that may be present even when such systems having been designed, developed, and/or operated according to industry best practices and standards. For example, outputs may be produced that could be considered erroneous, harmful, offensive, and/or biased; such outputs may not necessarily reflect the opinions or positions of the entities developing or deploying these systems. Furthermore, in some cases, references to third-party products and/or services in the outputs should not be construed as endorsements or affiliations by the entities providing the AI/ML systems. Generated content can be filtered for potentially inappropriate or dangerous material prior to being presented to users, while human oversight and/or ability to override or correct erroneous or undesirable outputs can be maintained as a failsafe.

The present disclosure further contemplates that users of the AI/ML systems should refrain from using the services in any manner that infringes upon, misappropriates, or violates the rights of any party. Furthermore, the AI/ML systems should not be used for any unlawful or illegal activity, nor to develop any application or use case that would commit or facilitate the commission of a crime, or other tortious, unlawful, or illegal act. The AI/ML systems should not violate, misappropriate, or infringe any copyrights, trademarks, rights of privacy and publicity, trade secrets, patents, or other proprietary or legal rights of any party, and appropriately attribute content as required. Further, the AI/ML systems should not interfere with any security, digital signing, digital rights management, content protection, verification, or authentication mechanisms. The AI/ML systems should not misrepresent machine-generated outputs as being human-generated.

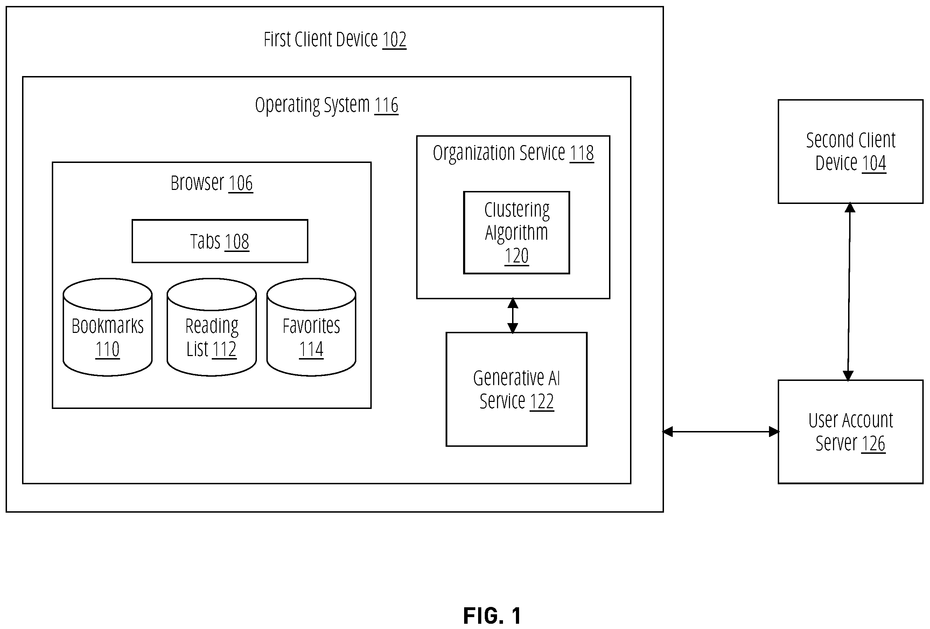

FIG. 1 illustrates an example client device that includes an organization service for organizing open content items in a user interface panel and for helping a user account select a storage location for a content item to be saved in accordance with some embodiments of the present technology. Although the example system depicts particular system components and an arrangement of such components, this depiction is to facilitate a discussion of the present technology and should not be considered limiting unless specified in the appended claims. For example, some components that are illustrated as separate can be combined with other components, some components can be divided into separate components, some components might not be present or needed, and additional components may be present.

It is an all too common scenario for users to have a large number of application windows or pages within an application open. Such application windows, or pages within an application, are generally represented as interface elements commonly referred to as tabs. Perhaps the most common use of tabs is to represent respective webpages open in a browser, but many other applications offer tabbed representations of documents. For example, many pdf viewers allow multiple pdf files to be opened in the same application window and represent the respective pdf files as tabs. Spreadsheet applications use tabs to represent different worksheets within the same file. And, while not always referred to as tabs, many operating systems represent windows across different applications as tabs in a taskbar. Even operating systems that utilize window previews as interface elements to represent application windows can, for the purposes of the present technology, be considered a type of tab.

As used herein, the term interface element refers to a user interface representation of an application window or a user interface representation of a page within an application.

The present technology pertains to a method of grouping interface elements that relate to a common topic or project. Throughout the rest of the description, examples are provided that refer to a web browser environment wherein the interface elements represent webpages that are opened or have been opened in the web browser. Although examples are given in this context, the present technology is applicable to the grouping of any collection of interface elements in a user interface panel, including interface elements that span across applications (e.g., a trip planning project might include a word processing document for notes, web pages for research, pdfs opened from the web pages, etc.).

The present technology might be particularly useful for users who are strong multi-taskers. They might be planning a trip while working on a research project. As the user's attention gets allocated from one project to another, many windows can be opened, and it can become difficult for the user to find a webpage amongst the many that are open. The present technology can bring some organization to the many interface elements by grouping them together by topic or project.

The present technology also pertains to suggesting storage locations for a content item to be saved. Users can define their own storage locations in the form of folders. In addition, file systems and applications can also have their own default storage locations that apply to different types of content. Users can find it cumbersome to navigate a folder structure to find the desired location to store a content item. The present technology can alleviate this burden by providing suggested storage locations when a user indicates that they wish to store a content item. In some embodiments, this might allow the user account to select and store a content item with a single action, and help the user avoid the multiple user interface interactions generally needed to navigate a folder structure.

One environment in which the present technology is particularly useful is in the storage of webpages in a browser folder structure. A browser folder structure can include bookmarks, favorites, and a reading list, which need to be navigated and selected to save a webpage. While a browser is used as an example environment, the present technology is applicable to many other environments as well.

FIG. 1 illustrates an example system for carrying out the present technology. A first client device 102 includes an operating system 116 that includes an organization service 118 and a generative AI service 122. The operating system 116 also provides an environment in which applications can be executed. Browser 106 is an example of one such application.

As addressed further herein, browser 106 can be used to open content items and can represent the content items as interface elements in a user interface panel, which in the context of a browser is tabs in a tab bar. The browser 106 can interface with an organization service 118 to organize the interface elements into groupings of interface elements. More specifically, the browser can share information about the content items that are open within the browser, and the organization service 118 can determine an organizational system for grouping the interface elements. In some embodiments, the organization service 118 makes use of a clustering algorithm 120 to determine the groupings of interface elements. The organization service 118 or the browser 106 can interact with the generative AI service 122 to generate a name for the groupings of interface elements.

It is an important aspect of the present technology that the organization service 118 and the generative AI service 122 are located on the client device. By locating the organization service 118 and generative AI service 122 on the client device, the privacy of the user account is better preserved since information about the content items the user account has opened does not need to leave the client device.

Similarly, the browser 106 can also utilize the organization service 118 to determine an organization scheme among folders, such as bookmarks 110, reading lists 112, and favorites 114. The determined organization scheme can then be used to suggest a storage location for a content item to be saved.

Again, it is important that the organization service 118 and the generative AI service 122 are located on the client device to better preserve the privacy of the user account.

A possible exception to the preference to keep all information about content items open on the client device can exist when the user account is associated with multiple client devices, such as the first client device 102 and the second client device 104. In such instances, the user account might request that their content items be managed across client devices. In such instances, the second client device 104 can communicate limited information about the content items opened on the second client device 104 to a user account server 126, which can securely share this information with the first client device 102. This can enhance the organizational experience of the user account by bringing the organization from one client device to another.

In some embodiments, organization service 118 can be made available to applications on the first client device 102 via an application programming interface. In this way, more applications, including third-party applications running on the client device, can take advantage of the organization service 118 and the generative AI service 122 to aid in organizing interface elements and saving of content items by calling the organization service 118 and providing some information about the content items open within the third-party application. In response, the organization service 118 can provide a grouping of content items that should be grouped together, and the name under which the grouping should be displayed. Likewise, the third-party applications can send some information about the content items in a folder structure and the names of the folders in the folder structure so that the organization service 118 can learn the organizational scheme. Thereafter, the third-party applications can provide information about a content item to be saved via the API, and the organization service 118 can return a listing of top suggested storage locations for the content items.

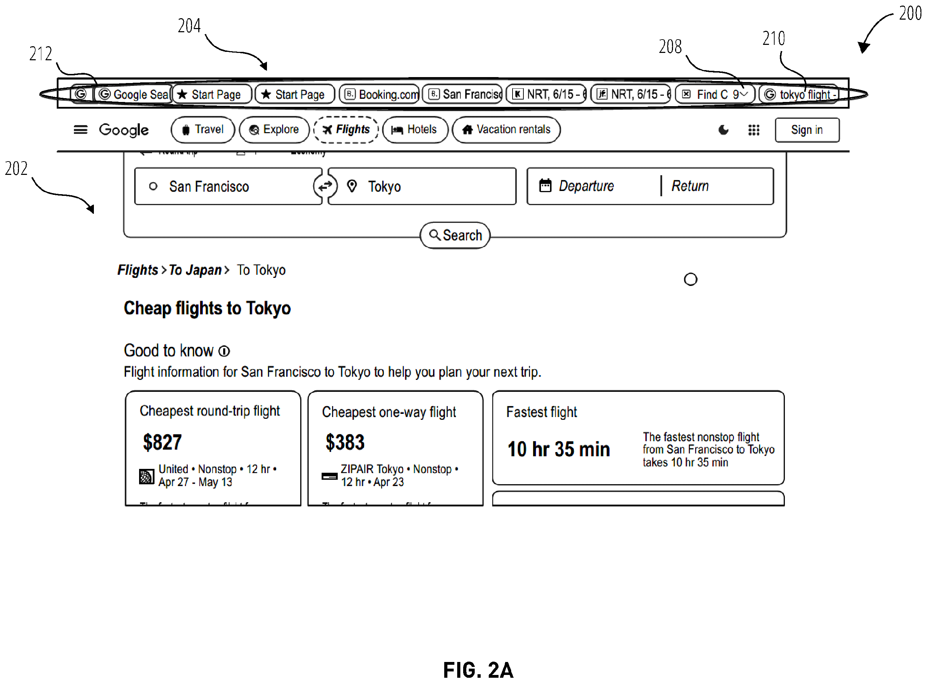

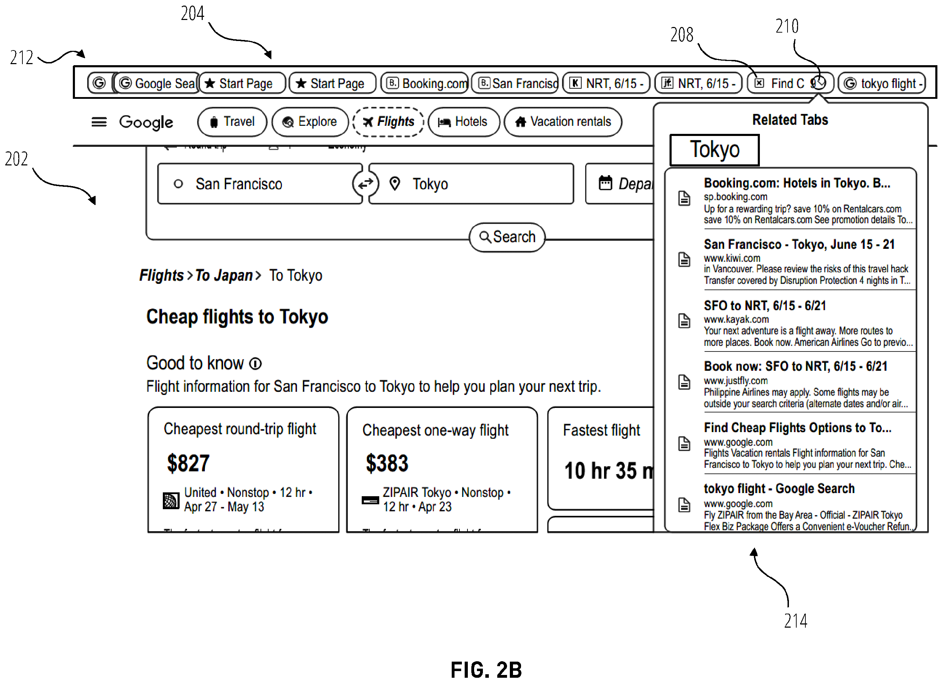

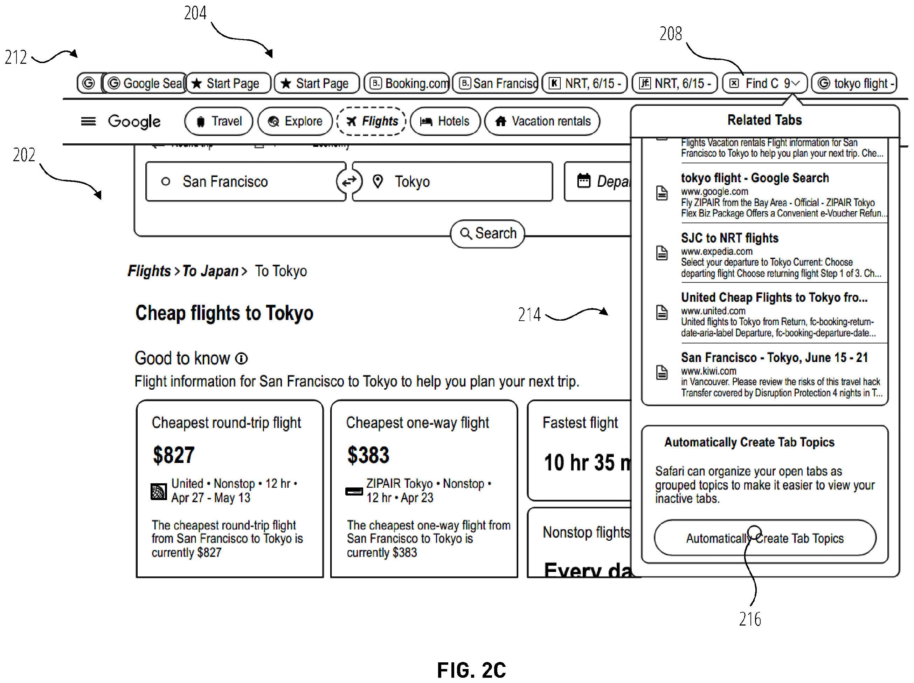

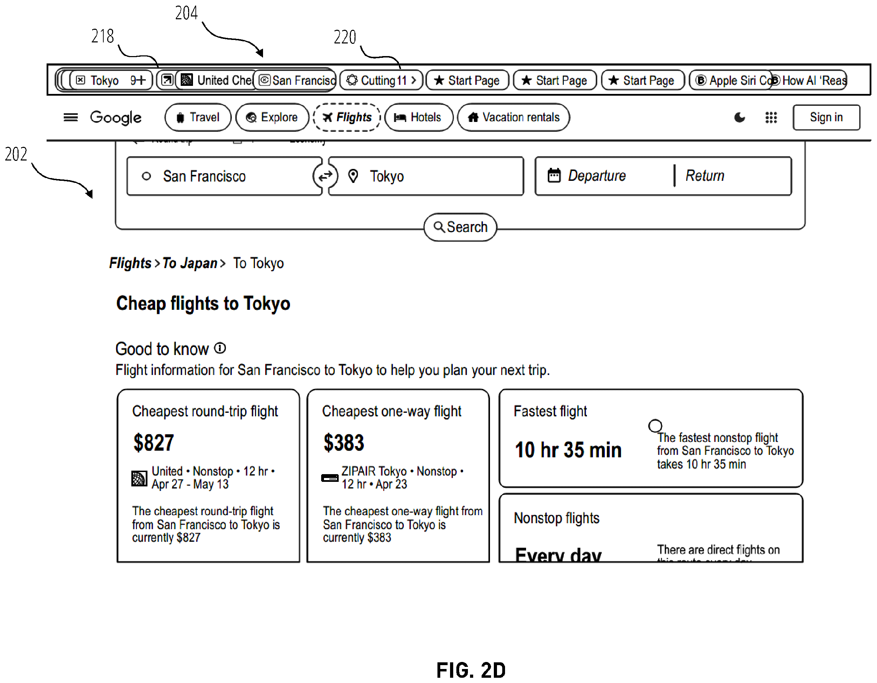

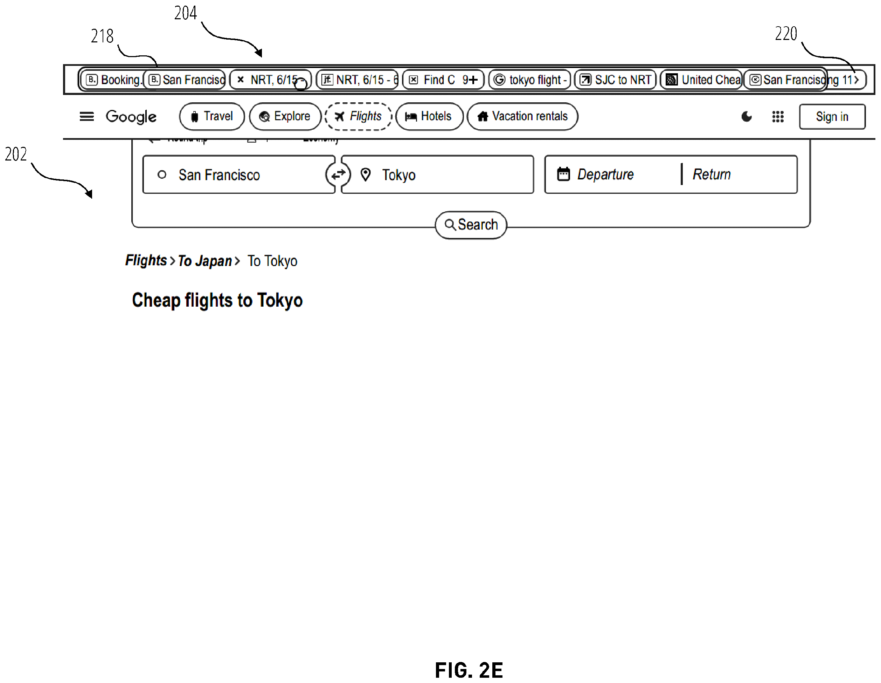

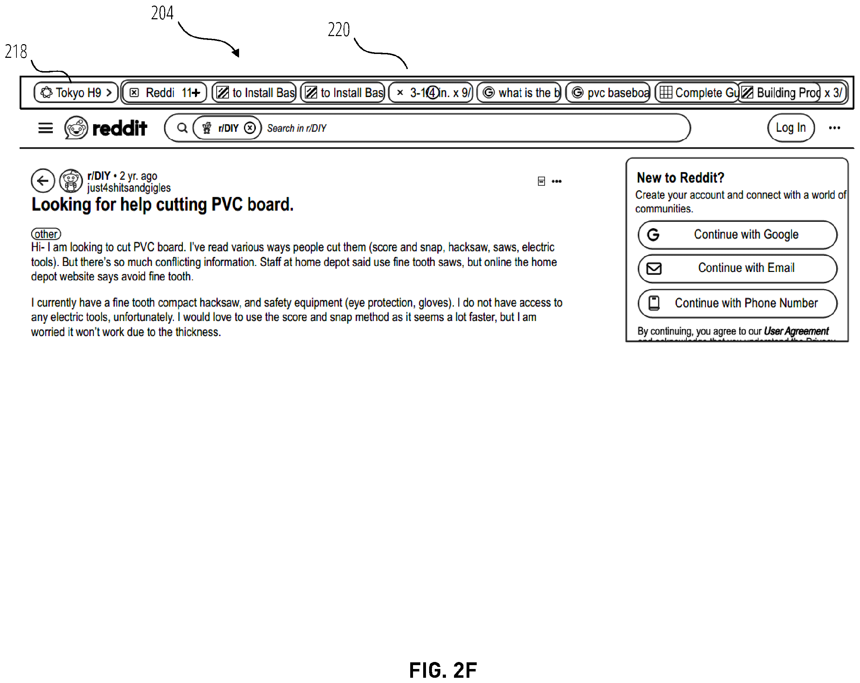

FIG. 2A, FIG. 2B, FIG. 2C, FIG. 2D, FIG. 2E, and FIG. 2F illustrates an example graphical user interface that includes interface elements that can be organized in accordance with some embodiments of the present technology. While FIG. 2A, FIG. 2B, FIG. 2C, FIG. 2D, FIG. 2E, and FIG. 2F illustrates a particular user interface, the present technology should not be considered limited to use with such an interface. Rather the user interfaces illustrated in FIG. 2A, FIG. 2B, FIG. 2C, FIG. 2D, FIG. 2E, and FIG. 2F are provided to illustrate example options and example functionality provided by the present technology.

FIG. 2A illustrates an example web browser 200 that has rendered a first content item 202, and represents the first content item 202 as first interface element 208 (e.g., a tab). First interface element 208 is represented amongst a collection of other interface elements 204 in a user interface panel 212.

The interface elements are visual representations of respective content items. For example, the interface elements can be tabs in a tab bar, window previews in a task bar, or an operating system panel. The user interface panel can be a tab bar in an application, a taskbar of an operating system, or an operating system panel that displays interface elements associated with the content items displayed in a plurality of applications. The interface elements are associated with respective tabs and windows displaying the content items.

The first content item 202 is an example of a web page searching for flights for a trip to Tokyo, and many of the content items open in the web browser 200 pertain to planning a trip to Tokyo. These content items are represented in user interface panel 212 as interface elements 204.

As new content items are browsed, the present technology can identify groupings of interface elements and indicate to the user account that a grouping of interface elements is available by presenting an expander element 210.

FIG. 2B illustrates the example web browser 200 after a user account has selected the expander element 210, resulting in the display of a panel showing a proposed grouping of interface elements 214. The proposed grouping of interface elements 214 lists several of the interface elements 204 that can also be recognized in the user interface panel 212.

FIG. 2C illustrates the proposed grouping of interface elements 214, displaying an option to create groupings of interface elements 216 from the proposed grouping of interface elements 214. In some embodiments, the selection of option to create groupings of interface elements 216 will allow other content items to be organized into groupings such that the result of selecting option to create groupings of interface elements 216 might be several groupings.

The grouping of interface elements is based on a relationship among content items. The relationship is defined by a semantic similarity among the content items in the grouping of interface elements. In some embodiments, the grouping also accounts for a source relationship between at least a pair of the content items in the grouping of interface elements. A source relationship reflects that a second content item is opened through an interaction in a first content item (the source of the second content item).

FIG. 2D illustrates web browser 200 after the user account has selected the option to create groupings of interface elements 216. Now the user interface panel 212 shows grouping of interface elements 218. The grouping of interface elements 218 is distinguished from the rest of the interface elements 204 in the user interface panel 212 by a subtle differentiation in a background color that shows that these interface elements 204 all belong to the same grouping. As illustrated in FIG. 2D the grouping of interface elements 218 is shown in a partially expanded state.

The grouping of interface elements is displayed in a collapsed state until selected. In the collapsed state the grouping of interface elements is represented by a title of the grouping of interface elements. When the grouping of interface elements is in an expanded state, the interface elements within the grouping of interface elements are individually visible, and when a first grouping of interface elements is in the expanded state, a second grouping of interface elements is in the collapsed state.

In FIG. 2E grouping of interface elements 218 is shown in an expanded state. The fully expanded state is displayed as a result of the user account manipulating a user interface device, such as a pointer to be located over the grouping of interface elements 218. In some embodiments, the user might need to click on the grouping of interface elements 218 to cause it to expand.

FIG. 2F illustrates the grouping of interface elements 218 in a collapsed state. The grouping of interface elements 218 is shown in a collapsed state when another grouping of interface elements 220 is shown in an expanded state. This can result when the user account has selected another grouping of interface elements 220 in a collapsed state, illustrated in FIG. 2D, which results in the another grouping of interface elements 220 expanding and grouping of interface elements 218 collapsing.

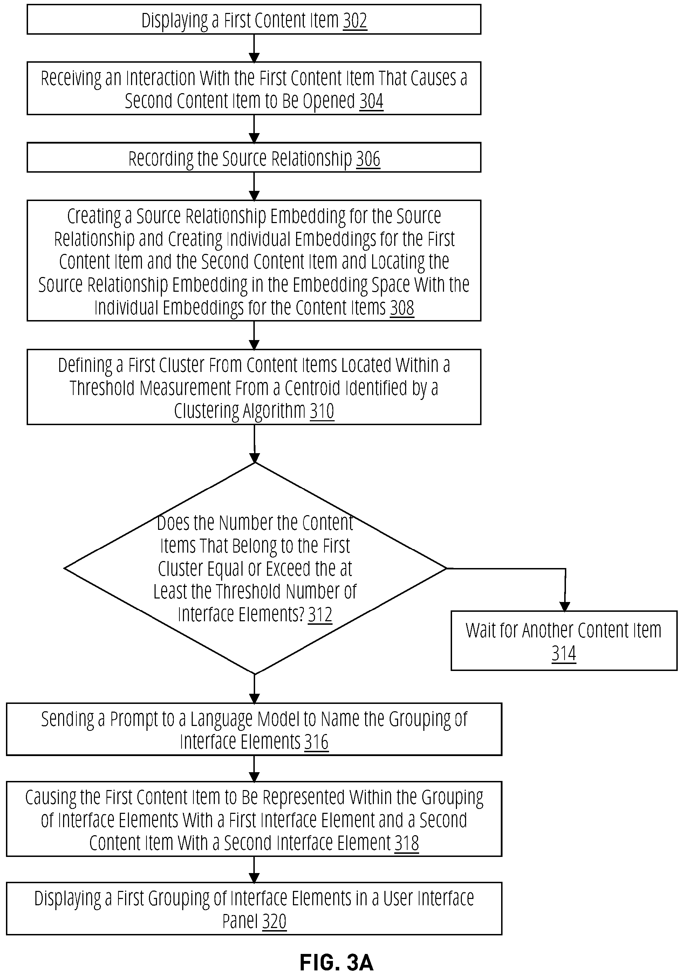

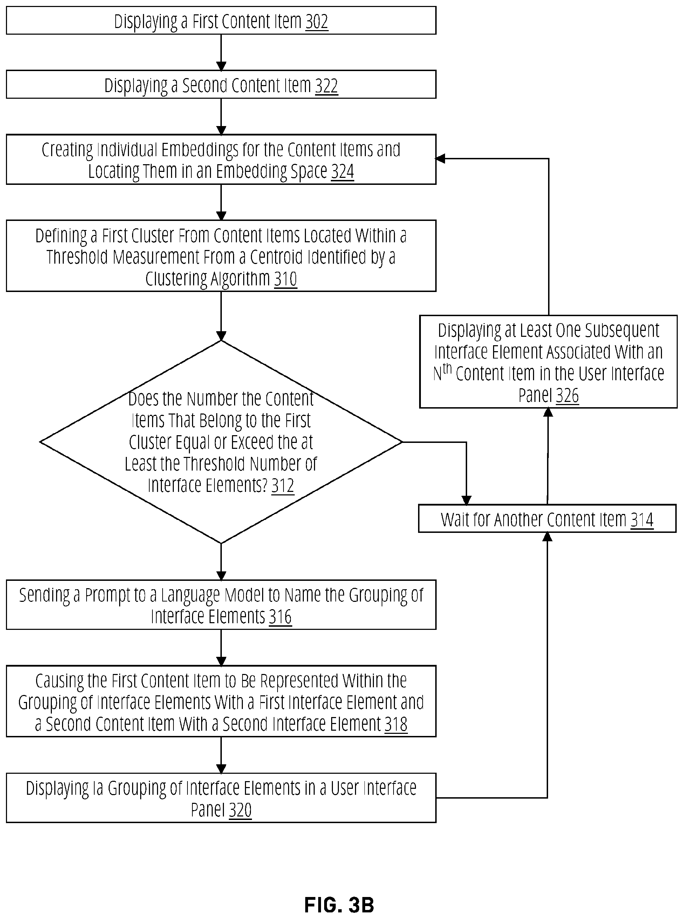

FIG. 3A illustrates an example method for grouping interface elements representing content items wherein a second content item is opened as a result of an interaction within a first content item in accordance with some embodiments of the present technology. FIG. 3B illustrates a similar example method for grouping interface elements representing content items as in FIG. 3A, except that the first content item is opened independently in accordance with some embodiments of the present technology. Although the example method depicts a particular sequence of operations, the sequence may be altered without departing from the scope of the present disclosure. For example, some of the operations depicted may be performed in parallel or in a different sequence that does not materially affect the function of the method. In other examples, different components of an example device or system that implements the method may perform functions at substantially the same time or in a specific sequence.

According to some examples, the method includes displaying a first content item at block 302. For example, browser 106, illustrated in FIG. 1, may display the first content item. As an example, the first content item might include a listing of possible flights for a trip, such as illustrated in FIG. 2A.

According to some examples, the method includes receiving an interaction with the first content item that causes a second content item to be opened at block 304. For example, the browser 106 illustrated in FIG. 1 may receive an interaction with the first content item that causes a second content item to be opened. Continuing the example above, the first content item lists possible flights for a trip, and the second content item could be a webpage opened by interacting with a link on the first webpage, where the webpage includes details on the specific flight. The first content item and the second content item have a source relationship resulting from the first content item being a source from which the second content item was opened.

According to some examples, the method includes recording the source relationship at block 306. For example, the organization service 118 illustrated in FIG. 1 may record the source relationship.

According to some examples, the method includes creating a source relationship embedding for the source relationship and creating individual embeddings for the first content item and the second content item, and locating the source relationship embedding in the embedding space with the individual embeddings for the content items at block 308. For example, the organization service 118 illustrated in FIG. 1 may create embeddings for the source relationship, the first content item, and the second content item, and locate all of these embeddings in the embedding space with the individual embeddings for the content items.

More specifically, as content items are opened, the organization service 118 can create embeddings that represent the content items as vectors or strings of values. These embeddings can represent the semantic content of the content items and source relationships. These embeddings can be located in an embedding space, whereby groupings of content items based on semantic similarity can be determined as addressed with respect to block 310.

According to some examples, the method includes defining a first cluster from content items located within a threshold measurement from a centroid identified by a clustering algorithm at block 310. For example, the organization service 118 illustrated in FIG. 1 may define a first cluster from embeddings of content items located within a threshold measurement from a centroid identified by a clustering algorithm.

The source relationships can be particularly beneficial in creating useful clusters because it could be possible that content items that are part of the same conceptual space, like the project of planning a trip, could cluster into distinct clusters. For example, in the example of planning a trip, some web pages might be about flights, some might be about hotels, and some might be about restaurants. Using a generic clustering algorithm could result in three different clusters, but the present technology uses the representation of the source relationship(s) as an influential method of identifying a cluster.

Note that there can be many source relationships in the clustering space. For example, one travel website might include links to flights, and another website might include links to restaurants. Each web page opened from a link on one of these pages or another of the pages could be a distinct source relationship. The clustering algorithm can identify a centroid at a central point amongst these source relationship embeddings.

The source relationship can also be a way of including time into the embedding space, as time is a useful indicator that webpages are related because the user will likely work on a concept in chunks of concentrated time periods. A source relationship can explicitly include a time value, or implicitly include time because a source relationship reflects a progression from one website to another, and the respective source relationships can create a chain of webpages that were opened throughout a period (e.g., even if time is not explicitly captured, sequences of webpages are captured which implies time progressions).

The centroid is calculated by the clustering algorithm by taking into account embeddings of source relationships and the embeddings of the content items in the embedding space. Clusters can be identified as content items that are closer to a particular centroid in the embedding space than other centroids, where centroids are the approximate centers of respective clusters. Thus, clusters are defined by processing the embedding space with the clustering algorithm to identify the first cluster and other clusters. The content items within a cluster have a semantic similarity among the content items.

According to some examples, the method includes determining whether a number the content items that belong to the first cluster equal or exceed the threshold number of interface elements at decision block 312. It is not worthwhile to create a grouping of interface elements if there are only two interface elements. For example, the organization service 118 illustrated in FIG. 1 may determine whether the number of content items that belong to the first cluster equals or exceeds the threshold number of interface elements. If the number of content items equals or exceeds the threshold, there are enough content items to create a grouping of interface elements and the method proceeds to block 316.

If the number of content items is less than a threshold, there are not enough content items to create a grouping of interface elements for the topic, and the method proceeds to block 314. According to some examples, the method includes waiting for another content item at block 314. For example, the organization service 118 illustrated in FIG. 1 may wait for another content item.

When there are enough content items, the method can proceed towards creating a grouping of interface elements. According to some examples, the method includes sending a prompt to a language model to name the grouping of interface elements at block 316. For example, the organization service 118 illustrated in FIG. 1 may send a prompt to a language model to name the grouping of interface elements. The prompt can include at least some data from the content items that are to be included in the grouping of interface elements. In some embodiments, the at least some data from the content items can include the text from the content items.

The language model can return, and the organization service 118 can receive, a title that summarizes the content items in the grouping of interface elements.

As privacy is an important consideration, it is preferred that the content of the content items remains on the client device. Therefore, the present technology utilizes an on-device language model.

In some embodiments, the content items can continue to be shown in the user interface panel 212 in the original locations until a user account selects an option to cause the organization service 118 to organize the interface elements into a grouping. For example, in FIG. 2B, the interface elements 204 are not grouped at this time. However, the interface elements 204 that could be organized into a grouping can be displayed with the expander element 210. When a user selects, and the expander element 210 receives the selection, the user interface can show a preview of the grouping of interface elements 214, which can also include an option to create groupings of interface elements 216 (shown in FIG. 2C) to organize the interface elements in the user interface panel 212.

According to some examples, the method includes rearranging the user interface panel 212 so that the first content item is represented within the grouping of interface elements with a first interface element, and a second content item is represented within a second interface element at block 318.

According to some examples, the method includes displaying a first grouping of interface elements in a user interface panel at block 320. For example, the browser 106 illustrated in FIG. 1 may display the first grouping of interface elements in a user interface panel. For example, FIG. 2D and FIG. 2E illustrates the grouping of interface elements 218 in the user interface panel 212.

The grouping of interface elements is an expandable user interface container. The grouping of interface elements is displayed in a collapsed state until selected. In the collapsed state, the grouping of interface elements is represented by a title of the grouping of interface elements. When the grouping of interface elements is in an expanded state, the interface elements within the grouping of interface elements are individually visible, and when a first grouping of interface elements is in the expanded state, a second grouping of interface elements is in the collapsed state.

As introduced above, FIG. 3B illustrates a similar method for grouping interface elements representing content items, as shown in FIG. 3A, except that the first content item is opened independently in accordance with some embodiments of the present technology.

FIG. 3B begins the same as FIG. 3A wherein the method includes displaying a first content item at block 302.

Different from FIG. 3A, in FIG. 3B, the method includes displaying a second content item at block 302. In FIG. 3B the second content item was opened independently from the first content item and therefore there is no source relationship between the first content item and the second content item. For example, the browser 106 illustrated in FIG. 1 may display a second content item.

Block 324 is similar to block 308 except that there is no source relationship to account for in block 324. According to some examples, the method includes creating individual embeddings for the content items and locating them in an embedding space at block 324. For example, the organization service 118 illustrated in FIG. 1 may create individual embeddings for the content items and locate them in an embedding space.

Block 310, decision block 312, block 314, block 316, block 318, and block 320 are all the same as addressed with respect to FIG. 3A. In fact, the method illustrated in FIG. 3A and FIG. 3B can occur together, where some content items are opened as a result of a source relationship, and some content items are not. All of the content items and source relationships can be turned into embeddings and located in the same embedding space. Content items that don't have a source relationship can be grouped into clusters with content items that do have a source relationship.

FIG. 3B ends with displaying at least one subsequent interface element associated with an n^{th} content item in the user interface panel at block 326. For example, the browser 106 illustrated in FIG. 1 may display at least one subsequent interface element associated with an n^{th} content item in the user interface panel. Block 326 reflects that the present technology is a recursive process. It does not end once groupings are created. Instead, a user account can continue to open content items and these content items can be included into existing groupings or be the basis for new groupings.

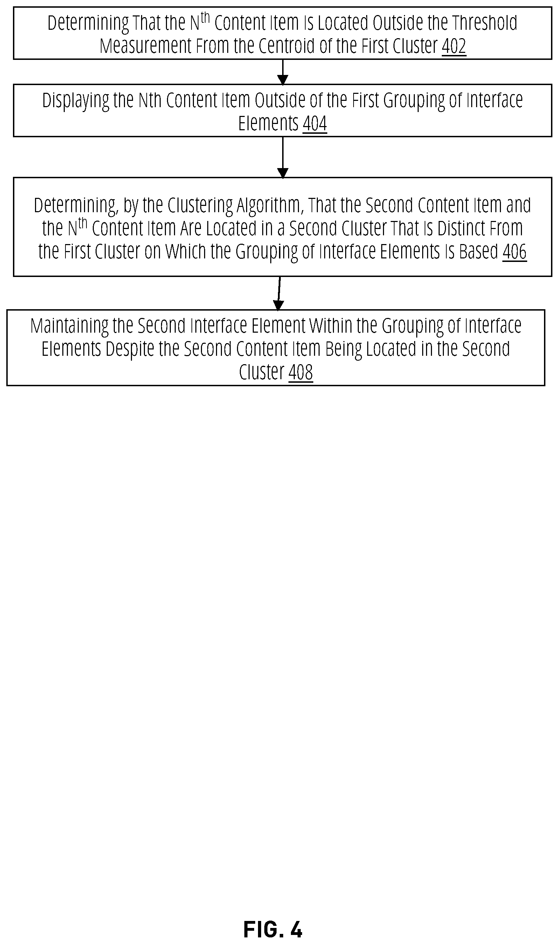

FIG. 4 illustrates an example method for organizing additional content items as they are opened in accordance with some embodiments of the present technology. Although the example method depicts a particular sequence of operations, the sequence may be altered without departing from the scope of the present disclosure. For example, some of the operations depicted may be performed in parallel or in a different sequence that does not materially affect the function of the method. In other examples, different components of an example device or system that implements the method may perform functions at substantially the same time or in a specific sequence.

FIG. 4 continues from the method illustrated in FIG. 3A and FIG. 3B, wherein an n^{th} content item is opened, and the present technology can determine how to organize the n^{th} content item.

According to some examples, the method includes determining that the n^{th} content item is located outside the threshold measurement from the centroid of the first cluster at block 402. The first cluster can contain the first content item and the second content item. For example, the organization service 118 illustrated in FIG. 1 may determine that the n^{th} content item is located outside the threshold measurement from the centroid of the first cluster, which indicates that the n^{th} content item does not belong in a grouping with the content items in the first cluster.

According to some examples, the method includes displaying the n^{th} content item outside of the first grouping of interface elements at block 404. For example, the organization service 118 illustrated in FIG. 1 may display the n^{th} content item outside of the first grouping of interface elements. The n^{th} content item could be located in another grouping of interface elements or could be located in the user interface panel outside of any other grouping of interface elements.

Occasionally, a challenging circumstance can occur, wherein the n^{th} content item does not belong inside an existing cluster, such as indicated at block 404, but the n^{th} content item and content item that is within the existing cluster do belong together in a different cluster. This instance is addressed with respect to block 406.

According to some examples, the method includes determining, by the clustering algorithm, that the second content item and the n^{th} content item are located in a second cluster that is distinct from the first cluster on which the grouping of interface elements is based at block 406, but the second content item is already grouped in the first grouping of interface elements.

According to some examples, the method includes maintaining the second interface element within the grouping of interface elements despite the second content item being located in the second cluster at block 408. For example, the organization service 118 illustrated in FIG. 1 may maintain the second interface element within the grouping of interface elements in order to help to user locate the second content item. While it might make logical sense to continuously organize the interface elements into tightly defined groupings, such a function could be disorienting to a user. If the user has begun to associate the location of the second content item in a particular grouping of interface elements, it could be confusing to the user if the content item were moved to another grouping. The user would not know where to look for the content item. Accordingly, block 408 reflects a sort of hysteresis that prefers the existing state of organization until a condition occurs that triggers a reorganization.

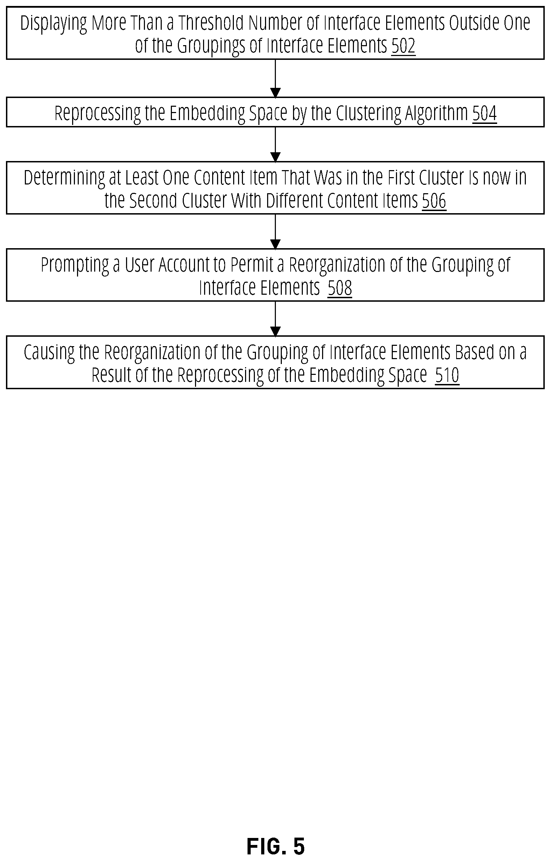

One condition is reflected in FIG. 5, wherein a reorganization can be triggered when more than a threshold number of content items start to be located outside of any existing cluster (e.g., there are too many ungrouped/unorganized tabs). Another condition could be that the user account explicitly requests a reorganization of the content items. Another condition could be that the user account has not interacted with the content items in a cluster for greater than a period of time such that the user's association between a content item and its location might not be very strong due to the period that has elapsed since the user last interacted with the content item.

FIG. 5 illustrates an example method for reorganizing exiting groupings of interface elements in accordance with some embodiments of the present technology. Although the example method depicts a particular sequence of operations, the sequence may be altered without departing from the scope of the present disclosure. For example, some of the operations depicted may be performed in parallel or in a different sequence that does not materially affect the function of the method. In other examples, different components of an example device or system that implements the method may perform functions at substantially the same time or in a specific sequence.

As introduced above, sometimes even a user interface panel that has been organized into groupings of interface elements can start to become disorganized.

According to some examples, the method includes displaying a plurality of subsequent interface elements in the user interface panel, wherein greater than a threshold number of respective content items associated with the plurality of subsequent interface elements are located outside of one of the groupings of interface elements at block 502. For example, the organization service 118 illustrated in FIG. 1 may display a plurality of subsequent interface elements outside of one of the groupings of interface elements. This can occur when the subsequent interface elements are located outside the threshold measurement from the centroid of the first cluster or any other cluster. Eventually, greater than a threshold number interface elements are no longer located with one of the grouping of interface elements. In some instances, this can be an indication that the groupings of interface elements are poorly defined. In other cases, the users might just be accessing content items that are not related to one another.

According to some examples, the method includes reprocessing the embedding space by the clustering algorithm at block 504. For example, the organization service 118 illustrated in FIG. 1 may reprocess the embedding space by the clustering algorithm when more than a threshold number of interface elements are located outside one of the groupings of interface elements.

According to some examples, the method includes determining at least one content item that was in the first cluster now groups into a second cluster with different content items at block 506. For example, the organization service 118 illustrated in FIG. 1 may determine at least one content item that was in the first cluster is now in the second cluster with different content items.

According to some examples, the method includes prompting a user account to permit a reorganization of the grouping of interface elements at block 508. For example, the organization service 118 illustrated in FIG. 1 may prompt a user account to permit a reorganization of the grouping of interface elements. Based on a determination that the reprocessing of the embedding space has resulted in a greater number of content items being grouped into the clusters in the embedding space.

According to some examples, the method includes causing the reorganization of the grouping of interface elements based on the result of the reprocessing of the embedding space at block 510. For example, the organization service 118 illustrated in FIG. 1 may cause the reorganization of the grouping of interface elements based on the result of the reprocessing of the embedding space. The browser can animate the movement of at least the second interface element into a different cluster to visually cue the user to recall that the content item has moved to a new grouping of interface elements.

Thus far, the present description has focused on content items open on a single device. However, users might be working across several devices. For example, a user account might begin researching a trip on a mobile device on a commute home, and then continue their research on a laptop once at home. In such instances, the present technology can create groupings of interface elements that include interface elements that represent content items open on another client device.

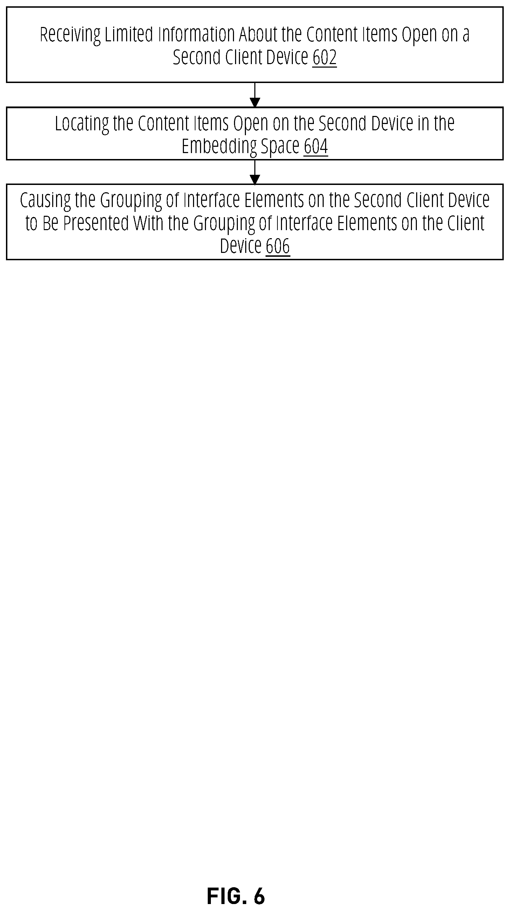

FIG. 6 illustrates an example method for presenting interface elements representing content items open on a second client device to be presented within the grouping of interface elements on a first client device in accordance with some embodiments of the present technology. Although the example method depicts a particular sequence of operations, the sequence may be altered without departing from the scope of the present disclosure. For example, some of the operations depicted may be performed in parallel or in a different sequence that does not materially affect the function of the method. In other examples, different components of an example device or system that implements the method may perform functions at substantially the same time or in a specific sequence.

According to some examples, the method includes receiving limited information about the content items open on a second client device at block 602. For example, the organization service 118 illustrated in FIG. 1 may receive limited information about the content items open on a second client device. The information is limited to protect the privacy of the user account who might not want the contents of the content item to be transmitted over the internet and through a server to be distributed to another client device.

In some embodiments, the limited information can include an identification of the grouping of interface elements on the second client device to which the content items open on the second client device belong. The limited information can also include a content item title, a URL, and a title of the grouping of interface elements on the second client device to which the content items open on the second client device belong. Of course, it is possible to send the full contents of the content item if that were desired.

According to some examples, the method includes locating the content items open on the second device in the embedding space at block 604. For example, the organization service 118 illustrated in FIG. 1 may locate the content items open on the second device in the embedding space.

According to some examples, the method includes causing the grouping of interface elements on the second client device to be presented with the grouping of interface elements on the client device at block 606. For example, the organization service 118 illustrated in FIG. 1 may cause the grouping of interface elements on the second client device to be presented with the grouping of interface elements on the client device when the content items open on the second device are located within the threshold measurement from the centroid of the cluster identified by the clustering algorithm.

Users also need help organizing items that are to be saved. While the present description has thus far focused on organizing interface elements representing open content items, the present technology can also be used to offer suggestions for where to save content items, too.

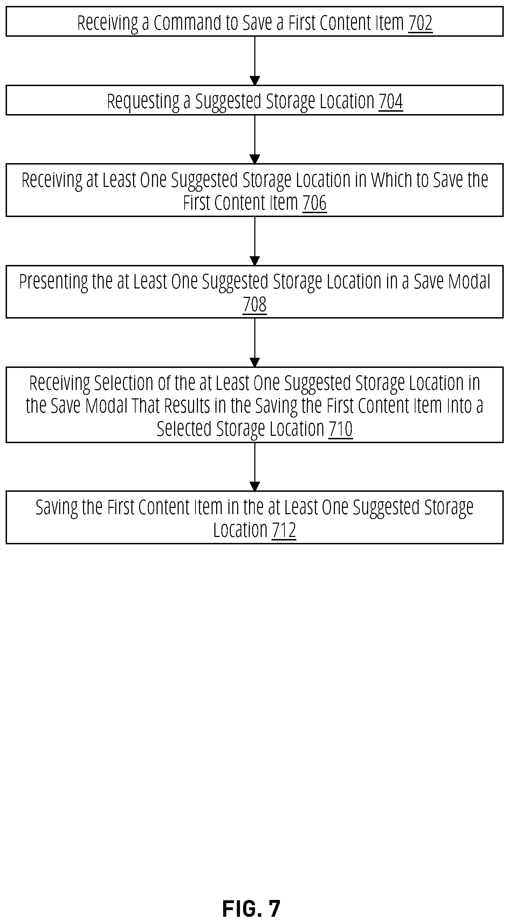

FIG. 7 illustrates an example method for providing a suggested storage location to save a content item in accordance with some embodiments of the present technology. Although the example method depicts a particular sequence of operations, the sequence may be altered without departing from the scope of the present disclosure. For example, some of the operations depicted may be performed in parallel or in a different sequence that does not materially affect the function of the method. In other examples, different components of an example device or system that implements the method may perform functions at substantially the same time or in a specific sequence.

Although FIG. 7 through FIG. 8C use a browser as an example of an application from which a content item is to be saved, the present technology can be used with any application.

According to some examples, the method includes receiving a command to save a first content item at block 702. For example, the browser 106 illustrated in FIG. 1 may receive a command to save a first content item. In some embodiments, the first content item is a webpage, and the command is provided by a user using a user interface device and is received by the internet browser.

According to some examples, the method includes requesting a suggested storage location at block 704. For example, the browser 106 illustrated in FIG. 1 may request a suggested storage location from the organization service 118. In some embodiments, instead of the browser 106 requesting the storage location, a save process of an operating system can interact with the organization service 118 to request the suggested storage location.

According to some examples, the method includes receiving at least one suggested storage location in which to save the first content item at block 706. For example, the organization service 118 illustrated in FIG. 1 may receive at least one suggested storage location in which to save the first content item. The suggested storage location is selected from a unit of organization within an internet browser. The unit of organization includes diverse categories of units of organization, such as bookmark folders, favorites, and reading list groupings. If the application were not an internet browser, the units of organization could be folders within the file system.

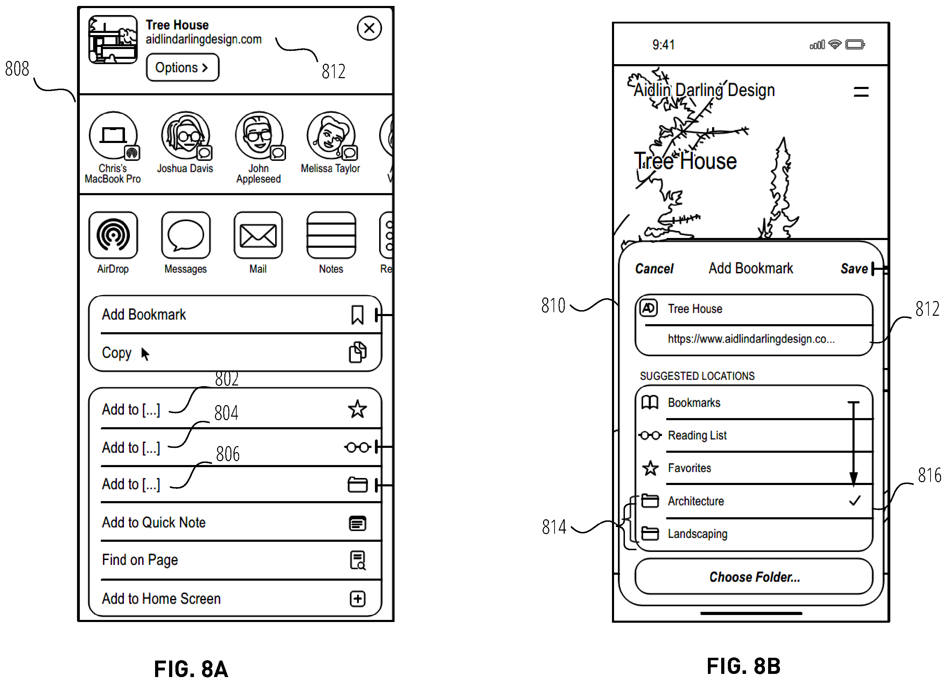

According to some examples, the method includes presenting at least one suggested storage location in a save modal at block 708. For example, the browser 106 illustrated in FIG. 1 may present at least one suggested storage location in a save modal as illustrated in FIG. 8A and FIG. 8B.

According to some examples, the method includes receiving a selection of at least one suggested storage location in the save modal that results in saving the first content item into a selected storage location at block 710. For example, the browser 106 illustrated in FIG. 1 may receive a selection of at least one suggested storage location in the save modal that results in saving the first content item into a selected storage location.

The selection of the at least one suggested storage location includes selecting a button to confirm that the user wants to save the content item in the at least one suggested storage location or that the user picks the at least one suggested storage location from a picklist including two or more suggested storage locations.

According to some examples, the method includes saving the first content item in the at least one suggested storage location at block 712. For example, the browser 106 illustrated in FIG. 1 may save the first content item in the at least one suggested storage location. The at least one suggested storage location includes stored content items that have a similarity to the first content item.

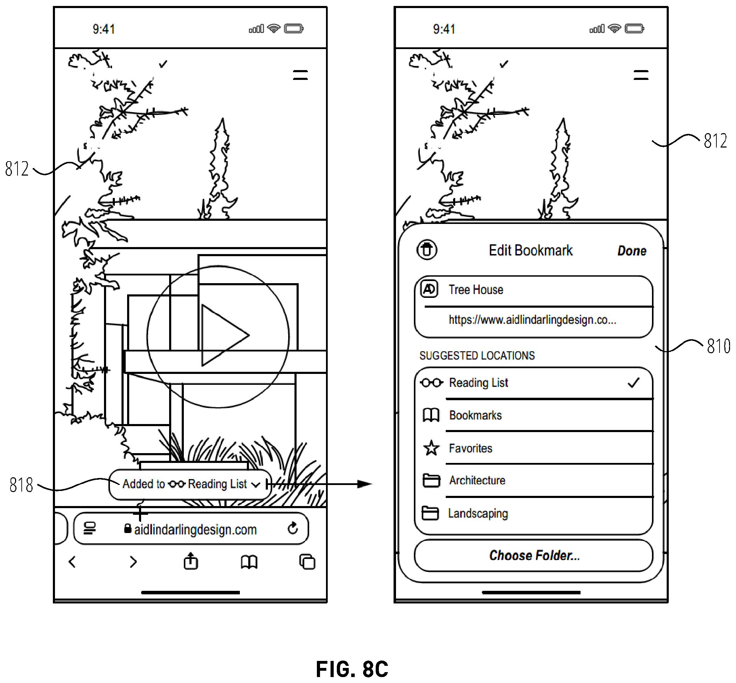

FIG. 8A, FIG. 8B, and FIG. 8C illustrate example save modals in accordance with some embodiments of the present technology. While FIG. 8A, FIG. 8B, and FIG. 8C illustrates a particular user interface, the present technology should not be considered limited to use with such an interface. Rather the user interfaces illustrated in FIG. 8A, FIG. 8B, and FIG. 8C are provided to illustrate example options and example functionality provided by the present technology.

FIG. 8A illustrates a first example of a save modal 808. The user has entered a command indicating that they would like to save content item 812. The present technology can use the organization service 118 to identify a top suggested favorites location 802, a top suggested reading list location 804, and a top suggested bookmarks location 806, and dynamically populate the menu with these options. The top suggested storage locations are determined from existing storage locations that have been previously utilized by the user account.

FIG. 8B illustrates a second example of a save modal 810. The save modal 810 is designed to accommodate the likelihood that the top suggested storage locations might include two or more locations of the same type (e.g., two or more bookmark folders or favorites locations, etc.). Accordingly, the top suggested storage locations provided by the organization service 118 can be listed in the menu. This opens up the possibility that the top suggested storage locations can all be from the same category (e.g., bookmarks, favorites, reading list, etc.). Suggested storage locations 814 show the top two folders provided by the organization service 118, and the top suggested storage location includes a default selection of the top suggested storage location 816. Should the user desire another storage location, they can scroll the list and navigate to their preferred storage location.

FIG. 8C illustrates an example wherein a top suggested storage location 818 can be displayed on top of the content item 812. In FIG. 8C, the present technology attempts to help the user account avoid progressing to a save modal, such as save modal 810, by showing the user account the top suggested storage location 818. If the user would like to browse other storage locations or see other options, they can interact with the top suggested storage location 818 to cause the save modal 810 to be displayed.

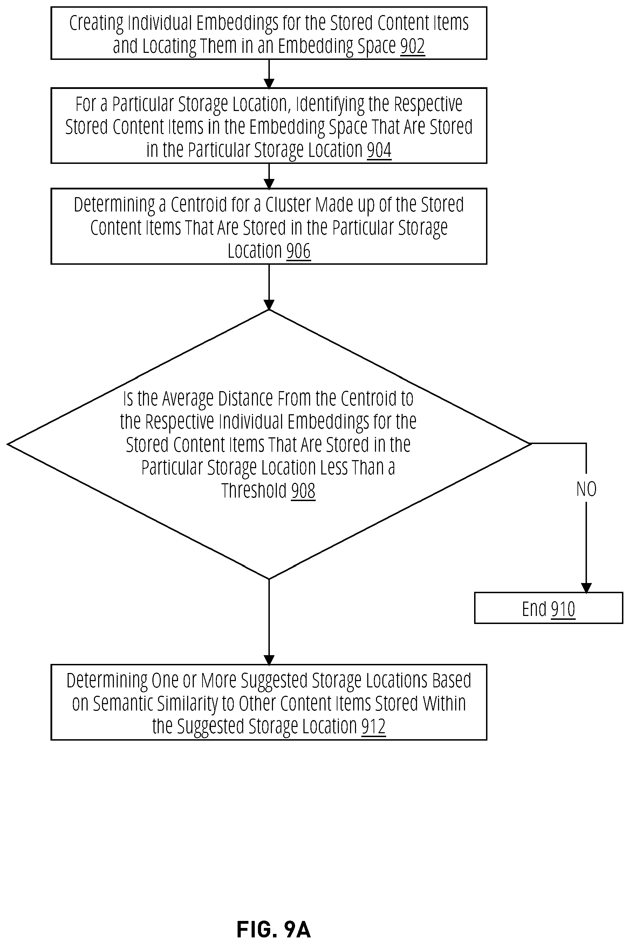

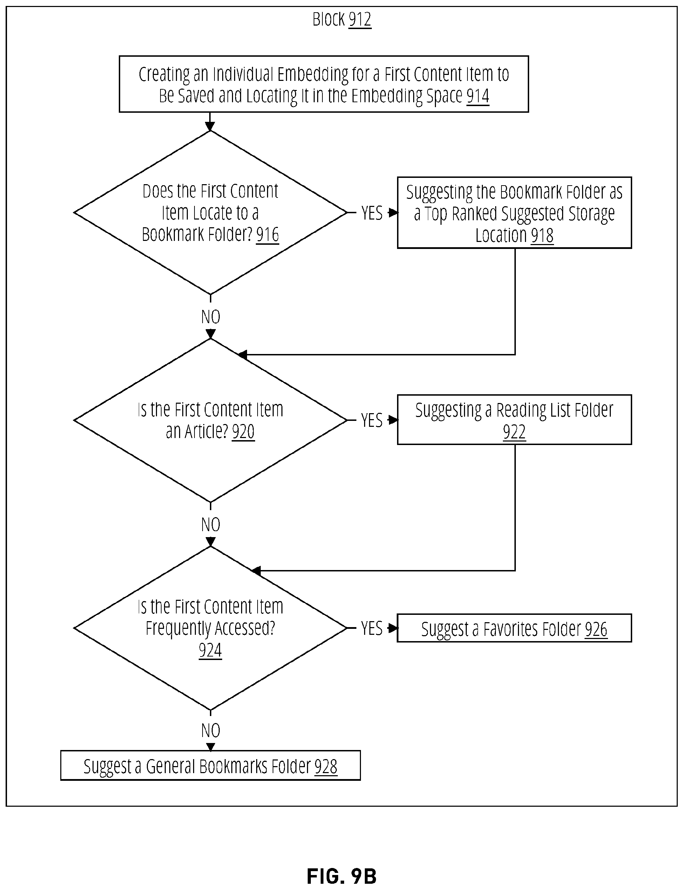

FIG. 9A and FIG. 9B illustrates an example method for identifying suggested storage locations in accordance with some embodiments of the present technology. Although the example method depicts a particular sequence of operations, the sequence may be altered without departing from the scope of the present disclosure. For example, some of the operations depicted may be performed in parallel or in a different sequence that does not materially affect the function of the method. In other examples, different components of an example device or system that implements the method may perform functions at substantially the same time or in a specific sequence.

FIG. 9A serves to determine whether the existing organizational structure for storing content items is organized using an organizational scheme for which the present technology can predict or recommend storage locations for additional content items. The present technology is particularly suited to recommended storage locations when the existing organization scheme is based on a similarity of content items. Particularly, a semantic similarity, but other characteristics could be used as a basis for similarity. For example, if the storage scheme is too broad, all content items might match only one storage location, and thus, the present technology would not provide a benefit. In another example, the storage scheme might be based on time. In another example, the storage scheme might not be one that can be interpreted by the present technology. Accordingly, FIG. 9A determines whether the present technology would be a benefit to the user account.

According to some examples, the method includes creating individual embeddings for the existing stored content items and locating them in an embedding space at block 902. For example, the organization service 118 illustrated in FIG. 1 may create individual embeddings for the stored content items and locate them in an embedding space.

In some embodiments, the individual embeddings for the content items and the embedding space are created in a background operation that occurs prior to a user account attempting to save a particular content item. In this way, the present technology can be enabled or disabled before a user account requests to save a new content item.

Since the organization system might exist across different computing devices, as is common with browser organizational systems (bookmarks) and cloud-based file systems, the content items from which to create the embeddings might not be stored on the client device. Accordingly, the present technology can download a preview version of the stored content items from which to create the individual embeddings, which can include limited content from the content item, such as a title, major headings, and perhaps a summary of the content. The embeddings can be created from this information.

According to some examples, the method includes, for a particular storage location (e.g., a particular folder), identifying the respective stored content items (e.g., identifying content items within the folder) in the embedding space that are stored in the particular storage location at block 904. For example, the organization service 118 illustrated in FIG. 1 may identify the respective stored content items in the embedding space that are stored in the particular storage location.

According to some examples, the method includes determining a centroid for a cluster made up of the stored content items that are stored in the particular storage location at block 906. For example, the organization service 118 illustrated in FIG. 1 may determine a centroid for a cluster made up of the stored content items that are stored in the particular storage location. In this step, the organization service 118 is creating a cluster to fit the particular storage location.

According to some examples, the method includes determining whether an average distance from the centroid to respective individual embeddings for the stored content items that are stored in the particular storage location is greater than a threshold at decision block 908. For example, the organization service 118 illustrated in FIG. 1 may determine whether the average distance from the centroid to the respective individual embeddings for the stored content items that are stored in the particular storage location is greater than a threshold. When the average distance is greater than the threshold, the storage location is deemed to be a unit of organization based on a theme other than semantic similarity. Since, in some embodiments, storage locations that are not based on topic are not part of the recommendations, the method ends at block 910.

Another mechanism in which the present technology could determine that it should not be used to recommend suggested storage locations is to create clusters based on the subject of the content items in any existing folder. Thereafter, the organization service 118 can attempt to determine which clusters (folders) the remaining content items should be clustered into. If the organization service 118 does not identify the actual storage location for the content item as being one of the top suggested storage locations often enough, this indicates that organization service 118 is not likely to do a good job recommending suggested storage locations for the current organization scheme, and the method can end at block 910.

When the average distance is less than the threshold, the storage location is deemed to be organized based on the semantic similarity among the stored content items, and the method can proceed to determine one or more suggested storage locations for a new content item based on semantic similarity to other content items stored within the suggested storage location at block 912.

Block 912 is illustrated in FIG. 9B as containing a plurality of steps that collectively determine one or more suggested storage locations for a new content item. FIG. 9B reflects the fact that it might be ambiguous to the organization service 118 where to save a particular content item. It could be that several storage locations might appear to be plausible storage locations for the content item. As such, the present technology can recommend several suggested storage locations as in FIG. 8B. In some embodiments, as illustrated in FIG. 8A, the present technology might attempt to recommend the top ranked bookmark folder, the top ranked reading list collection, and the top ranked favorites folder. In both embodiments, the top ranked location should be sorted to the top of a picklist.

Several locations might be plausible for a few reasons. First, the existing storage locations might not be meticulously organized, such that even if a storage location is organized by a semantic similarity, the user might make mistakes and misclassify some content items. Another reason is that the category could be broad, such that the content items that belong in one category might overlap with another category.

According to some examples, the method includes creating an individual embedding for the first content item to be saved and locating it in the embedding space at block 914. For example, the organization service 118 illustrated in FIG. 1 may create an individual embedding for the first content item and locate it in the embedding space. As addressed above with respect to block 902, the embedding space is already created.

According to some examples, the method includes determining whether the first content item locates to a bookmark folder in the embedding space at decision block 916. This determination reflects the fact that bookmark folders are generally folders that are explicitly created by a user account, and therefore, if a content item appears that it could belong to one or more bookmark folders, then preference should be given to the bookmark folders as the suggested storage location. When the present technology is used with an application other than a browser, preference should be given to user-created folders before system-created folders (e.g., a documents or photos folder that is part of a storage system by default).

When the determination at decision block 916 indicates that one or more bookmark folders are a possible storage location for the first content item, the method includes suggesting the bookmark folder as a top ranked suggested storage location at block 918. If the content item might fit into multiple bookmarks folders, than the bookmark folder for which the content item is the best fit (the embedding for the content item is located closer to the centroid for that folder), should be the top ranked suggested storage location, and the other folder(s) would be ranked just below the top ranked bookmarks folder.

Even if some bookmark folders are the top ranked folders, the method can progress to evaluating other storage locations.

The organization service 118 can also determine that a bookmarks folder is not appropriate if the embedding for the first content item is located too far (outside a threshold) distance from the centroid representing one of the bookmarks folders.

According to some examples, the method includes determining whether the first content item is an article at decision block 920. If the content item is an article, the method includes suggesting a reading list folder at block 922. For example, the organization service 118 illustrated in FIG. 1 may suggest a reading list folder. Articles can be stored in a reading list. If no bookmarks folder was appropriate, then a reading list (or a subfolder) can be the top ranked suggested storage location.

The reading list folders are sometimes not named by the user account. As the user account saves articles to the reading list or a reading list folder, the topic of the reading list folder could migrate and then would benefit from being retitled.

According to some examples, after suggesting a reading list folder, the method includes prompting an artificial intelligence (AI) model to determine if the addition of the first content item into the selected storage location should result in a retitling of the reading list folder. The prompt can direct the AI model to prefer an existing name of the reading list folder unless the addition of the first content item into the selected storage location suggests a meaningful change in the name of the reading list folder. The AI model provides an updated name for the reading list folder, updating the name of the reading list folder.

According to some examples, the method includes determining whether the first content item is frequently accessed at decision block 924. If the content item is frequently accessed, the method includes suggesting a favorites folder at block 926.

According to some examples, the method includes suggesting a general bookmarks folder at block 928 when no other location is appropriate.

While FIG. 9B has been addressed as a hierarchy of decisions, the ranking of suggested storage locations can be handled using a weighted function. For example, each suggested storage location could be ranked by a value that is a product of a weighting factor and the distance from the embedding of the first content item to the centroid for the storage location. The weighting factor can be configured to give preference to a user defined bookmarks folder, then a reading list, and then a favorites folder.

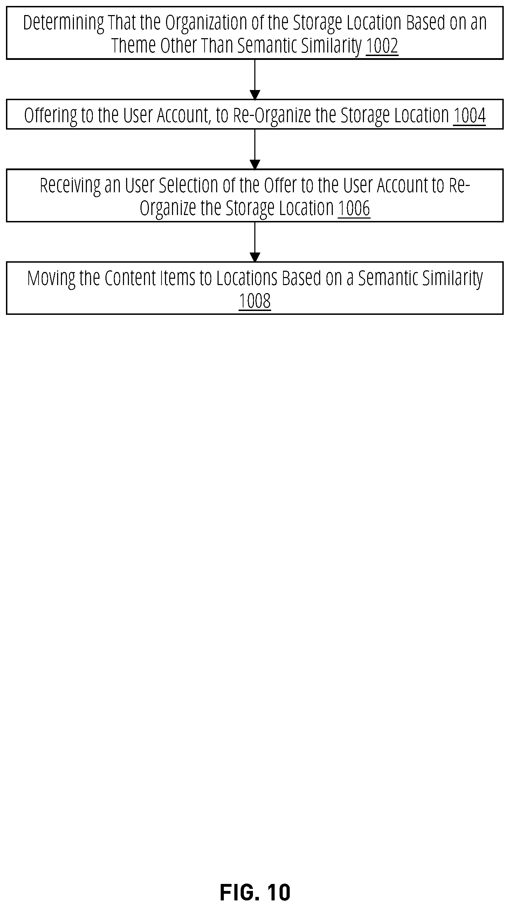

FIG. 10 illustrates an example method for reorganizing the storage locations of content items in accordance with some embodiments of the present technology. Although the example method depicts a particular sequence of operations, the sequence may be altered without departing from the scope of the present disclosure. For example, some of the operations depicted may be performed in parallel or in a different sequence that does not materially affect the function of the method. In other examples, different components of an example device or system that implements the method may perform functions at substantially the same time or in a specific sequence.

Since the present technology is able to cluster content items into groupings, the present technology can be used to bring organization to a collection of content items that is not otherwise organized.

According to some examples, the method includes determining that the organization of the storage location is based on a theme other than semantic similarity (or not a theme at all) at block 1002. For example, the organization service 118 illustrated in FIG. 1 may determine that the organization of the storage location based on a theme other than semantic similarity.

According to some examples, the method includes offering to the user account to reorganize the storage location at block 1004. For example, the organization service 118 illustrated in FIG. 1 may offer to reorganize the storage location by presenting the option to the user in a user interface.

According to some examples, the method includes receiving a user selection of the offer to the user account to reorganize the storage location at block 1006. After receiving the selection of the offer, the method includes moving the content items to locations based on a semantic similarity at block 1008. For example, the organization service 118 illustrated in FIG. 1 may move the content items to locations based on a semantic similarity.

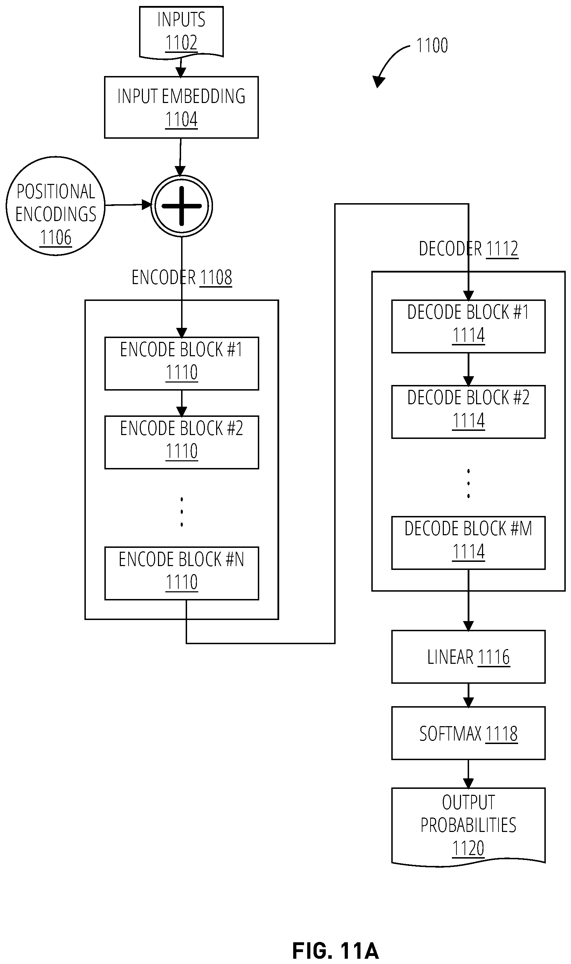

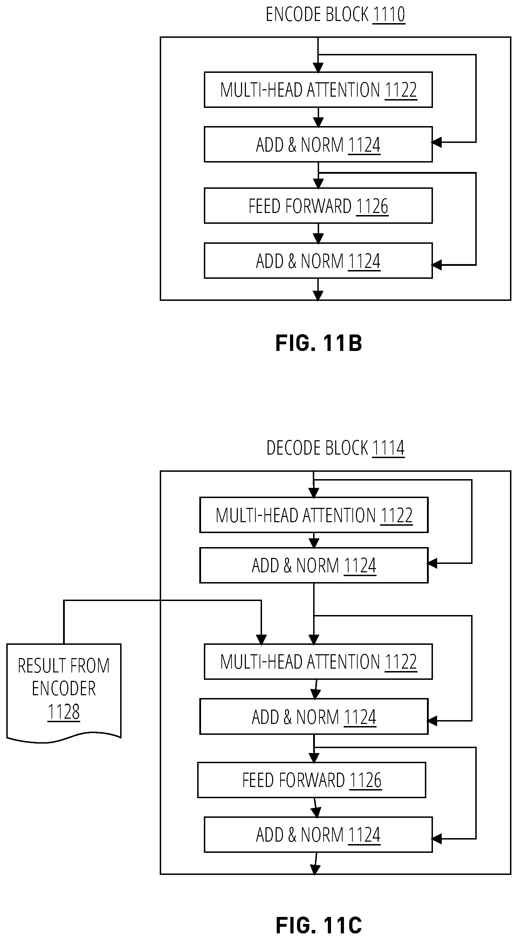

FIG. 11A, FIG. 11B, and FIG. 11C illustrates an example transformer architecture in accordance with some embodiments of the present technology. Examples of ML models that use a transformer neural network (e.g., transformer architecture 1100) can include, e.g., generative pretrained transformer (GPT) models and Bidirectional Encoder Representations from Transformer (BERT) models. The transformer architecture 1100, which is illustrated in FIG. 11A, FIG. 11B, and FIG. 11C, includes inputs 1102, input embedding block 1104, positional encodings 1106, encoder 1108 including encode blocks 1110, decoder 1112 including decode blocks 1114, linear block 1116, softmax block 1118, and output probabilities 1120.

Input embedding block 1104 is used to provide embeddings for words. For example, embedding can be used in text analysis. According to certain non-limiting examples, the embedding is a real-valued vector that encodes the meaning of the word in such a way that words that are closer in the vector space are expected to be similar in meaning. Word embeddings can be obtained using language modeling and feature learning techniques, where words or phrases from the vocabulary are mapped to vectors of real numbers. According to certain non-limiting examples, the input embedding block 1104 can be learned embeddings to convert the input tokens and output tokens to vectors of dimension that have the same dimension as the positional encodings, for example.

Positional encodings 1106 provide information about the relative or absolute position of the tokens in the sequence. According to certain non-limiting examples, positional encodings 1106 can be provided by adding positional encodings to the input embeddings at the inputs to the encoder 1108 and decoder 1112. The positional encodings have the same dimension as the embeddings, thereby enabling a summing of the embeddings with the positional encodings. There are several ways to realize the positional encodings, including learned and fixed. For example, sine and cosine functions having different frequencies can be used. That is, each dimension of the positional encoding corresponds to a sinusoid. Other techniques of conveying positional information can also be used, as would be understood by a person of ordinary skill in the art. For example, learned positional embeddings can instead be used to obtain similar results. An advantage of using sinusoidal positional encodings rather than learned positional encodings is that doing so allows the model to extrapolate to sequence lengths longer than the ones encountered during training.

Encoder 1108 can use stacked self-attention and point-wise, fully connected layers. Encoder 1108 can be a stack of N identical layers (e.g., N = 6), and each layer can be an encode block, as illustrated by encode block 1110 shown in FIG. 11B. Each encode block 1110 has two sub-layers: (i) a first sub-layer has a multi-head attention block 1122 and (ii) a second sub-layer has a feed forward block 1126, which can be a position-wise fully connected feed-forward network. The feed forward block 1126 can use a rectified linear unit (ReLU).

Encoder 1108 uses a residual connection around each of the two sub-layers, followed by an add & norm block 1124, which performs normalization. For example, the output of each sub-layer can be LayerNorm(x+ Sublayer(x)). To facilitate these residual connections, all sub-layers in the model, as well as the embedding layers, produce output data having a same dimension.

Similar to encoder 1108, decoder 1112 uses stacked self-attention and point-wise, fully connected layers. Decoder 1112 can also be a stack of M identical layers (e.g., M = 6), and each layer can be a decode block, as illustrated by decode block 1112 shown in FIG. 11B. In addition to the two sub-layers (i.e., the sublayer with multi-head attention block 1122 and the sub-layer with feed forward block 1126) found in encode block 1110, decode block 1114 can include a third sub-layer, which performs multi-head attention over the output of the encoder stack. Similar to encoder 1108, decoder 1112 uses residual connections around each of the sub-layers, followed by layer normalization. Additionally, the sub-layer with multi-head attention block 1122 can be modified in the decoder stack to prevent positions from attending to subsequent positions. This masking, combined with the fact that the output embeddings are offset by one position, can ensure that the predictions for position i can depend only on the known output data at positions less than i.

Linear block 1116 can be a learned linear transformation. For example, when transformer architecture 1100 is being used to translate from a first language into a second language, linear block 1116 can project the output from the last decode softmax block 1118 into word scores for the second language (e.g., a score value for each unique word in the target vocabulary) at each position in the sentence. For instance, if the output sentence has seven words and the provided vocabulary for the second language has 10,000 unique words, then 10,000 score values are generated for each of those seven words. The score values indicate the likelihood of occurrence for each word in the vocabulary in that position of the sentence.

Softmax block 1118 then turns the scores from linear block 1116 into output probabilities 1120 (which add up to 1.0). In each position, the index provides for the word with the highest probability, and then maps that index to the corresponding word in the vocabulary. Those words then form the output sequence of transformer architecture 1100. The softmax operation is applied to the output from linear block 1116 to convert the raw numbers into output probabilities 1120 (e.g., token probabilities).

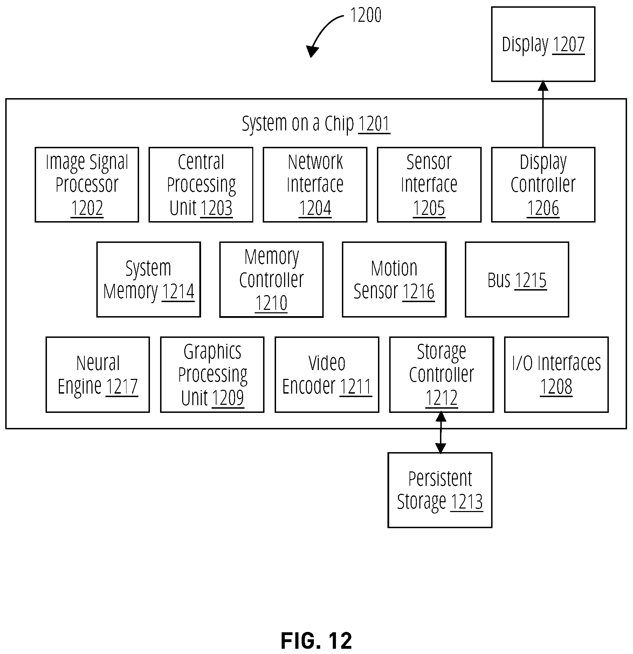

FIG. 12 is a system diagram illustrating device 1200 in accordance with some embodiments of the present technology. Although the example system depicts particular system components and an arrangement of such components, this depiction is to facilitate a discussion of the present technology and should not be considered limiting unless specified in the appended claims. For example, some components that are illustrated as separate can be combined with other components, some components can be divided into separate components, some components might not be present or needed, and additional components may be present.

Device 1200 may include, among other components, system-on-a system on a chip 1201, system memory 1214, persistent storage 1213, motion sensor 1216, and display 1207.

System on a chip 1201 is embodied as one or more integrated circuit (IC) chips and performs various data processing processes. System on a chip 1201 may include, among other components, image signal processor 1202, one or more central processing unit 1203, network interface 1204, sensor interface 1205, display controller 1206, one or more graphics processing unit 1209, memory controller 1210, video encoder 1211, storage controller 1212, one or more neural engine 1217 and various other input/output (I/O) I/O interfaces 1208, and bus 1215. Some components of system on a chip 1201 can be connected directly to system memory 1214, while other components are connect to other components by bus 1215. System on a chip 1201 may include more or fewer components than those shown in FIG. 12.

Image signal processor 1202 (ISP) is hardware that performs various stages of an image processing pipeline. In some embodiments, image signal processor 1202 may receive raw image data from image sensor, and process the raw image data into a form that is usable by other subcomponents of system on a chip 1201 or components of device 1200. Image signal processor 1202 may perform various image-manipulation operations.

Central processing unit 1203 (CPU) may be embodied using any suitable instruction set architecture, and may be configured to execute instructions defined in that instruction set architecture. Central processing unit 1203 may be general-purpose or embedded processors using any of a variety of instruction set architectures (ISAs), such as the x86, PowerPC, SPARC, RISC, ARM or MIPS ISAs, or any other suitable ISA. Although a single CPU is illustrated in FIG. 12, system on a chip 1201 may include multiple CPUs. In multiprocessor systems, each of the CPUs may commonly, but not necessarily, implement the same ISA.

Graphics processing unit 1209 (GPU) is graphics processing circuitry for performing graphical data. For example, GPU may render objects to be displayed into a frame buffer (e.g., one that includes pixel data for an entire frame). Graphics processing unit 1209 may include one or more graphics processors that may execute graphics software to perform a part or all of the graphics operation, or hardware acceleration of certain graphics operations.

Neural engine 1217 includes one or more processing cores optimized for machine learning tasks including training and inference tasks. Neural engine 1217 enables rapid processing of artificial intelligence (AI) and machine learning (ML) operations. Neural engine 1217 is optimized for tasks such as advanced image processing, natural language processing, and pattern recognition, significantly improving the efficiency and speed of AI-related processes. Its architecture is designed to support a wide range of machine learning models while being highly energy-efficient, thereby enhancing the user experience through faster, more responsive applications and functionalities that rely on AI and ML technologies.

I/O interfaces 1208 are hardware, software, firmware or combinations thereof for interfacing with various input/output components in device 1200. I/O components may include devices such as keypads, buttons, audio devices, and sensors such as a global positioning system. I/O interfaces 1208 process data for sending data to such I/O components or process data received from such I/O components.

Network interface 1204 is enables data to be exchanged between devices device 1200 and other devices via one or more networks (e.g., carrier or agent devices). For example, video or other image data may be received from other devices via network interface 1204 and be stored in system memory 1214 for subsequent processing and display. The networks may include, but are not limited to, Local Area Networks (LANs) (e.g., an Ethernet or corporate network) and Wide Area Networks (WANs). The image data received via network interface 1204 may undergo image processing processes by image signal processor 1202.

Sensor interface 1205 is circuitry for interfacing with motion sensor 1216. Sensor interface 1205 receives sensor information from motion sensor 1216 and processes the sensor information to determine the orientation or movement of the device 1200.

Display controller 1206 is circuitry for sending image data to be displayed on display 1207. Display controller 1206 receives the image data from image signal processor 1202, central processing unit 1203, graphics processing unit 1209 or system memory 1214 and processes the image data into a format suitable for display on display 1207.

Memory controller 1210 is circuitry for communicating with system memory 1214. Memory controller 1210 may read data from system memory 1214 for processing by image signal processor 1202, central processing unit 1203, graphics processing unit 1209 or other subcomponents of system on a chip 1201. Memory controller 1210 may also write data to system memory 1214 received from various subcomponents of system on a chip 1201.

Video encoder 1211 is hardware, software, firmware or a combination thereof for encoding video data into a format suitable for storing in persistent storage 1213 or for passing the data to network interface 1204 for transmission over a network to another device.

In some embodiments, one or more components of system on a chip 1201 or some functionality of these components may be performed by software components executed on image signal processor 1202, central processing unit 1203, graphics processing unit 1209. Such software components may be stored in system memory 1214, persistent storage 1213 or another device communicating with device 1200 via network interface 1204.

For clarity of explanation, in some instances, the present technology may be presented as including individual functional blocks including functional blocks comprising devices, device components, steps or methods in a method embodied in software, or combinations of hardware and software.

Any of the steps, operations, functions, or processes described herein may be performed or implemented by a combination of hardware and software services or services, alone or in combination with other devices. In some embodiments, a service can be software that resides in memory of a client device and/or one or more servers of a content management system and perform one or more functions when a processor executes the software associated with the service. In some embodiments, a service is a program or a collection of programs that carry out a specific function. In some embodiments, a service can be considered a server. The memory can be a non-transitory computer-readable medium.

In some embodiments, the computer-readable storage devices, mediums, and memories can include a cable or wireless signal containing a bit stream and the like. However, when mentioned, non-transitory computer-readable storage media expressly exclude media such as energy, carrier signals, electromagnetic waves, and signals per se.

Methods according to the above-described examples can be implemented using computer-executable instructions that are stored or otherwise available from computer-readable media. Such instructions can comprise, For example, instructions and data which cause or otherwise configure a general purpose computer, special purpose computer, or special purpose processing device to perform a certain function or group of functions. Portions of computer resources used can be accessible over a network. The executable computer instructions may be, For example, binaries, intermediate format instructions such as assembly language, firmware, or source code. Examples of computer-readable media that may be used to store instructions, information used, and/or information created during methods according to described examples include magnetic or optical disks, solid-state memory devices, flash memory, USB devices provided with non-volatile memory, networked storage devices, and so on.

Devices implementing methods according to these disclosures can comprise hardware, firmware and/or software, and can take any of a variety of form factors. Typical examples of such form factors include servers, laptops, smartphones, small form factor personal computers, personal digital assistants, and so on. The functionality described herein also can be embodied in peripherals or add-in cards. Such functionality can also be implemented on a circuit board among different chips or different processes executing in a single device, by way of further example.

The instructions, media for conveying such instructions, computing resources for executing them, and other structures for supporting such computing resources are means for providing the functions described in these disclosures.

### Aspects:

The present technology includes computer-readable storage mediums for storing instructions, and systems for executing any one of the methods embodied in the instructions addressed in the aspects of the present technology presented below:
Aspect 1: A method comprising: displaying, by an interface element organization service, in a user interface panel, a grouping of interface elements, wherein the interface elements are visual embeddings for respective content items, wherein the grouping of interface elements is based on a relationship among content items, the relationship is defined by a semantic similarity among the content items in the grouping of interface elements and a source relationship between at least a pair of the content items in the grouping of interface elements, and wherein the grouping of interface elements includes a threshold number of interface elements.
Aspect 2: The method of aspect 1, the method further comprising: prior to the displaying the grouping of interface elements in the user interface panel, receiving a selection of an option to review the content items and create the grouping of interface elements.
Aspect 3: The method of aspect 1, wherein the grouping of interface elements is an expandable user interface container, wherein the grouping of interface elements is displayed in a collapsed state until selected, while in the collapsed state the grouping of interface elements is represented by a title of the grouping of interface elements.
Aspect 4: The method of aspect 3, wherein while the grouping of interface elements is in an expanded state, the interface elements within the grouping of interface elements are individually visible, and while a first grouping of interface elements is in the expanded state, a second grouping of interface elements is in the collapsed state.
Aspect 5: The method of aspect 1, wherein the grouping of interface elements is created by the method comprising: creating individual embeddings for the content items and locating them in an embedding space; defining a first cluster from content items located within a threshold measurement from a centroid identified by a clustering algorithm; and representing, within the grouping of interface elements, the first content item with a first interface element and a second content item with a second interface element, wherein the clustering algorithm identifies clusters among embeddings in the embedding space.
Aspect 6: The method of aspect 5, wherein the content items within the first cluster have semantic similarity amongst the content items.
Aspect 7: The method of aspect 5, wherein the defining of the first cluster includes processing the embedding space by the clustering algorithm to identify the first cluster.
Aspect 8: *The method of* aspect 5, *wherein the grouping of interface elements is created in an on-device process running on a client device.*
Aspect 9: The method of aspect 5, wherein the grouping of interface elements is created by the method comprising: displaying a first content item; receiving an interaction with the first content item that causes a second content item to be opened, wherein the first content item and the second content item have the source relationship resulting from the first content item being a source of the second content item; *recording the source relationship;* and representing, within the grouping of interface elements, the first content item with the first interface element and the second content item with the second interface element.
Aspect 10: The method of aspect 9, wherein the grouping of interface elements is created by the method comprising: creating a source relationship embedding for the source relationship and locating the source relationship embedding in the embedding space with the individual embeddings for the content items; wherein the centroid is calculated by the clustering algorithm by taking into account embeddings of source relationships and the content items in the embedding space.
Aspect 11: The method of aspect 5, further comprising: sending a prompt to a language model to name the grouping of interface elements, wherein the prompt includes at least some data from the content items to be included in the grouping of interface elements, *wherein the at least some data from the content items includes text from the content items.*
Aspect 12: *The method of* aspect 1, *wherein the user interface panel is a tab bar in an application.*
Aspect 13: *The method of* aspect 1, *wherein the user interface panel is a taskbar of an operating system.*
Aspect 14: The method of aspect 1, wherein the user interface panel is an operating system panel that displays interface elements associated with the content items displayed in a plurality of applications, wherein the interface elements are associated with respective tabs and windows displaying the content items.
Aspect 15: The method of aspect 5, further comprising: displaying, by the interface element organization service, in the user interface panel, at least one subsequent interface element associated with an n^{th} content item, wherein the n^{th} content item is located outside the threshold measurement from the centroid, whereby the at least one subsequent interface element is not within the grouping of interface elements; in accordance with a determination, by the clustering algorithm, that the second content item and the n^{th} content item are located in a second cluster that is distinct from the first cluster on which the grouping of interface elements is based, maintaining the second interface element within the grouping of interface elements despite the second content item being located in the second cluster.
Aspect 16: The method of aspect 15, further comprising: displaying, by the interface element organization service, in the user interface panel, a plurality of subsequent interface elements, wherein greater than a threshold number of respective content items associated with the plurality of subsequent interface elements are located outside the threshold measurement from the centroid of the first cluster or any other cluster; reprocessing the embedding space by the clustering algorithm; determining at least one content item that was in the first cluster is now in the second cluster with different content items.
Aspect 17: The method of aspect 16, further comprising: prompting a user account to permit a reorganization of the grouping of interface elements based on a determination that the reprocessing of the embedding space has resulted in a greater number of content items being grouped into the clusters in the embedding space.
Aspect 18: The method of aspect 16, further comprising: reorganizing the grouping of interface elements based on a result of the reprocessing of the embedding space by animating movement of at least the second interface element into a different cluster.
Aspect 19: The method of aspect 1, further comprising: receiving, from a server, limited information about the content items open on a second client device, wherein the limited information includes an identification of the grouping of interface elements on the second client device to which the content items open on the second client device belong; and presenting the grouping of interface elements on the second client device with the grouping of interface elements on the client device.
Aspect 20: The method of aspect 5, further comprising: receiving, from a server, limited information about the content items open on a second client device; locating the content items open on the second device to the embedding space; including one of the content items open on the second device into the first grouping of interface elements when the one of the content items open on the second device is located within the threshold measurement from the centroid of the cluster identified by the clustering algorithm.
Aspect 21: The method of aspect 20, wherein the limited information includes a content item title, a URL, and a title of the grouping of interface elements on the second client device to which the content items open on the second client device belong.
Aspect 22: The method of aspect 1, further comprising: providing at least a portion of text from the content items to a language model with a prompt to classify the respective content items into the groupings of interface elements, wherein the language model provide a name for a particular grouping of interface elements and a listing of content items that are included in the particular grouping of interface elements.
Aspect 23: A method comprising: receiving a command to save a first content item, *wherein the first content item is a webpage, wherein the command is received by a internet browser;* suggesting at least one suggested storage location in which to save the first content item; and saving the first content item in the at least one suggested storage location, wherein the at least one suggested storage location includes stored content items that have a similarity to the first content item, *wherein the similarity is a semantic similarity.*
Aspect 24: The method of aspect 23, further comprising: suggesting a first suggested storage location as the suggested storage location over a second suggested storage location, wherein the first suggested storage location is a bookmarks folder and a second suggested storage location is a reading list folder or a favorites folder.
Aspect 25: The method of aspect 23, wherein the at least one suggested storage location is identified from multiple candidate suggested storage locations, wherein a bookmark folder receive a first weight value, and a reading list folder receives a second weight value that is less the first weight value, whereby the bookmarks folder is preferred over the reading list folder.
Aspect 26: *The method of* aspect 23, *wherein the suggested storage location is selected from a unit of organization within an internet browser, wherein the unit of organization includes diverse categories of units of organization, wherein the unit of organization includes bookmark folders, favorites, and reading list groupings.*
Aspect 27: The method of aspect 23, further comprising: presenting the at least one suggested storage location in a save modal; and receiving selection of the at least one suggested storage location in the save modal that results in the saving the first content item into a selected storage location, *wherein the selection of the at least or suggested storage location includes selective a button to confirm that the user wants to save the content item in the at least one suggested storage location or that the user picks the at least one suggested storage location from a picklist including two or more suggested storage locations.*
Aspect 28: The method of aspect 23, further comprising: when the selected storage location of the suggested storage locations is a reading list folder, prompting an artificial intelligence (AI) model to determine if an addition of the first content item into the selected storage location should result in a retitling of the reading list folder, *wherein the prompt directs the AI model to prefer an existing name of the reading list folder unless the addition of the first content item into the selected storage location suggests a meaningful change in the name of the reading list folder*; and when the AI model provides an updated name for the reading list folder, updating the name of the reading list folder.
Aspect 29: The method of aspect 23, further comprising: prior to receiving the command to save the first content item, evaluate storage locations of the stored content items to determine a respective semantic similarity that defines a respective storage location of the storage locations.
Aspect 30: The method of aspect 29, wherein the evaluating the storage locations of the stored content items is performed by the method comprising: creating individual embeddings for the stored content items and locating them in an embedding space; for a particular storage location, identifying the respective stored content items in the embedding space that are stored in the particular storage location; and determining a centroid for a cluster made up of the stored content items that are stored in the particular storage location.
Aspect 31: *The method of* aspect 30, *wherein the individual* embeddings *are created for the content items in advance.*
Aspect 32: *The method of* aspect 30, *wherein the individual* embeddings *are not located in the embedding space until after receiving* the *command to save the first content item.*
Aspect 33: *The method of* aspect 30, *wherein the embedding space is created in advance.*
Aspect 34: The method of aspect 30, further comprising: determining that an average distance from the centroid to respective individual embedding for the stored content items that are stored in the particular storage location is less than a threshold, wherein when the average distance is less than the threshold, the storage location is deemed to contain the stored content items based on the semantic similarity among the stored content items.
Aspect 35: The method of aspect 30, the method comprising: prior to creating the individual embeddings, downloading a preview version of the stored content items from which to create the individual embeddings, *wherein the content items are links to webpages.*
Aspect 36: The method of aspect 30, further comprising: determining that an average distance from the centroid to respective individual embedding for the stored content items that are stored in the particular storage location is greater than a threshold, wherein when the average distance is greater than the threshold, the storage location is deemed to be a unit of organization based on an theme other than semantic similarity, *whereby storage locations that are not based on topic are not part of the recommendations.*
Aspect 37: The method of aspect 36, further comprising: in a background operation, performing an organization process on the storage location is deemed to be a unit of organization based on an theme other than semantic similarity; in accordance with a determination that the background operation can offer improved organization of the storage location, offering to the user account, to re-organize the storage location; *receiving a user selection of the offer to the user account to re-organize the storage location; and moving the content items to locations based on a semantic similarity.*

Exemplary embodiments are set out in the following items:
1. A method comprising:
   displaying a grouping of interface elements in a user interface panel, wherein interface elements are visual representations for respective content items, wherein the grouping of interface elements is based on a semantic similarity among the content items in the grouping of interface elements and a source relationship between at least a pair of the content items in the grouping of interface elements.
2. The method of item 1, further comprising:
   receiving a request to display a first content item,
   processing information about the first content item and other open content items to determine that the first content item has the semantic similarity with the respective content items in the grouping of interface elements;
   adding the first content item to the grouping of interface elements.
3. The method of any one of items 1-2, the method further comprising:
   prior to the displaying the grouping of interface elements in the user interface panel, receiving a selection of an option to review the content items and create the grouping of interface elements.
4. The method of any one of items 1-3, wherein the grouping of interface elements is an expandable user interface container, wherein the grouping of interface elements is displayed in a collapsed state until selected, while in the collapsed state the grouping of interface elements is represented by a title of the grouping of interface elements.
5. The method of item 4, wherein while the grouping of interface elements is in an expanded state, the interface elements within the grouping of interface elements are individually visible, and while a first grouping of interface elements is in the expanded state, a second grouping of interface elements is in the collapsed state.
6. The method of any one of items 1-5, wherein the grouping of interface elements is created by the method comprising:
   creating individual embeddings for the content items and locating them in an embedding space;
   defining a first cluster from content items located within a threshold measurement from a centroid identified by a clustering algorithm; and
   representing, within the grouping of interface elements, the first content item by a first interface element based on the first content item being located within a first cluster.
7. The method of item 6, wherein the grouping of interface elements is created by the method comprising:
   displaying a first content item;
   receiving an interaction with the first content item that causes a second content item to be opened, wherein the first content item and the second content item have the source relationship resulting from the first content item being a source of the second content item; and
   representing, within the grouping of interface elements, the first content item by the first interface element and the second content item by a second interface element.
8. The method of item 7, wherein the grouping of interface elements is created by the method comprising:
   creating a source relationship embedding for the source relationship and locating the source relationship embedding in the embedding space with the individual embeddings for the content items;
   wherein the centroid is calculated by the clustering algorithm by taking into account embeddings of source relationships and the content items in the embedding space.
9. The method of any one of items 6-8, further comprising:
   sending a prompt to a language model to name the grouping of interface elements, wherein the prompt includes at least some data from the content items to be included in the grouping of interface elements.
10. The method of any one of items 7-9, further comprising:
   displaying at least one subsequent interface element associated with an n^{th} content item in the user interface panel, wherein the n^{th} content item is located outside the threshold measurement from the centroid, whereby the at least one subsequent interface element is not within the grouping of interface elements;
   in accordance with a determination that the second content item and the n^{th} content item are located in a second cluster that is distinct from the first cluster on which the grouping of interface elements is based, maintaining the second interface element within the grouping of interface elements despite the second content item being located in the second cluster.
11. The method of any one of items 1-10, further comprising:
   receiving, from a server, limited information about the content items open on a second client device, wherein the limited information includes an identification of the grouping of interface elements on the second client device to which the content items open on the second client device belong; and
   presenting the grouping of interface elements on the second client device with the grouping of interface elements on the client device.
12. A system comprising:
   at least one processor; and
   a memory storing instructions that, when executed by the at least one processor, the instructions configure the system to:
      display a grouping of interface elements in a user interface panel, wherein interface elements are visual representations for respective content items, wherein the grouping of interface elements is based on a semantic similarity among the respective content items in the grouping of interface elements and a source relationship between at least a pair of the content items in the grouping of interface elements.
13. The system of item 12, wherein the instructions further configure the system to:
   receive a request to display a first content item,
   process information about the first content item and other open content items to determine that the first content item has the semantic similarity with the respective content items in the grouping of interface elements;
   add the first content item to the grouping of interface elements.
14. The system of any one of items 12-13, wherein the grouping of interface elements is an expandable user interface container, wherein the grouping of interface elements is displayed in a collapsed state until selected, while in the collapsed state the grouping of interface elements is represented by a title of the grouping of interface elements.
15. The system of any one of items 12-14, wherein the grouping of interface elements is created by the instructions effective to configure the system to:
   create individual embeddings for the content items and locate them in an embedding space;
   define a first cluster from content items located within a threshold measurement from a centroid identified by a clustering algorithm; and
   represent, within the grouping of interface elements, the first content item with a first interface element based on the first content item being located within a first cluster.
16. The system of item 15, wherein the grouping of interface elements is created by the instructions effective to configure the system to:
   display a first content item;
   receive an interaction with the first content item that causes a second content item to be opened, wherein the first content item and the second content item have the source relationship resulting from the first content item being a source of the second content item; and
   represent, within the grouping of interface elements, the first content item with the first interface element and the second content item with the second interface element.
17. A non-transitory computer-readable storage medium comprising instructions that when executed by a computer, cause at least one processor to:
   display a grouping of interface elements in a user interface panel, wherein interface elements are visual representations for respective content items, wherein the grouping of interface elements is based on a semantic similarity among the respective content items in the grouping of interface elements and a source relationship between at least a pair of the content items in the grouping of interface elements.
18. The non-transitory computer-readable storage medium of item 17, wherein the grouping of interface elements is created by the instructions effective to configure the at least one processor to:
   create individual embeddings for the content items and locating them in an embedding space;
   define a first cluster from content items located within a threshold measurement from a centroid identified by a clustering algorithm; and
   represent, within the grouping of interface elements, the first content item with a first interface element based on the first content item being located within the first cluster.
19. The non-transitory computer-readable storage medium of item 18, wherein the grouping of interface elements is created by the instructions effective to configure the at least one processor to:
   display a first content item;
   receive an interaction with the first content item that causes a second content item to be opened, wherein the first content item and the second content item have the source relationship resulting from the first content item being a source of the second content item; and
   represent, within the grouping of interface elements, the first content item with the first interface element and the second content item with the second interface element.
20. The non-transitory computer-readable storage medium of item 19, wherein the grouping of interface elements is created by the instructions effective to configure the at least one processor to:
   create a source relationship embedding for the source relationship and locating the source relationship embedding in the embedding space with the individual embeddings for the content items;
   wherein the centroid is calculated by the clustering algorithm by taking into account embeddings of source relationships and the content items in the embedding space.
21. A method comprising:
   receiving a command to save a first content item;
   suggesting at least one suggested storage location in which to save the first content item; and
   saving the first content item in the at least one suggested storage location, wherein the at least one suggested storage location includes stored content items that have a similarity to the first content item.
22. The method of item 21, further comprising:
   prior to receiving the command to save the first content item, evaluate storage locations of the stored content items to determine a respective semantic similarity that defines a respective storage location of the storage locations.
23. The method of item 22, wherein the evaluating the storage locations of the stored content items is performed by the method comprising:
   creating individual embeddings for the stored content items and locating them in an embedding space;
   for a particular storage location, identifying the respective stored content items in the embedding space that are stored in the particular storage location; and
   determining a centroid for a cluster made up of the stored content items that are stored in the particular storage location.
24. The method of item 23, further comprising:
   determining that an average distance from the centroid to respective individual embedding for the stored content items that are stored in the particular storage location is less than a threshold, wherein when the average distance is less than the threshold, the storage location is deemed to contain the stored content items based on the semantic similarity among the stored content items.
25. The method of any one of items 23-24, the method comprising:
   prior to creating the individual embeddings, downloading a preview version of the stored content items from which to create the individual embeddings.
26. The method of any one of items 23-25, further comprising:
   determining that an average distance from the centroid to respective individual embedding for the stored content items that are stored in the particular storage location is greater than a threshold, wherein when the average distance is greater than the threshold, the storage location is deemed to be a unit of organization based on an theme other than semantic similarity.
27. The method of any one of items 21-26, wherein the at least one suggested storage location is identified from multiple candidate suggested storage locations, wherein a bookmark folder receive a first weight value, and a reading list folder receives a second weight value that is less the first weight value, whereby the bookmarks folder is preferred over the reading list folder.
28. The method of any one of items 21-27, further comprising:
   suggesting a first suggested storage location as the suggested storage location over a second suggested storage location, wherein the first suggested storage location is a bookmarks folder and the second suggested storage location is a reading list folder or a favorites folder.
29. The method of any one of items 21-28, further comprising:
   presenting the at least one suggested storage location in a save modal; and
   receiving selection of the at least one suggested storage location in the save modal that results in the saving the first content item into a selected storage location.
30. The method of any one of items 21-29, further comprising:
   receiving a selection of a reading list folder from among the suggested storage locations, prompting an artificial intelligence (AI) model to determine if an addition of the first content item into the reading list folder should result in a retitling of the reading list folder; and
   when the AI model provides an updated name for the reading list folder, updating the name of the reading list folder.
31. A system comprising:
   at least one processor; and
   a memory storing instructions that, when executed by the at least one processor, configure the system to:
      receive a command to save a first content item;
      suggest at least one suggested storage location in which to save the first content item; and
      save the first content item in the at least one suggested storage location, wherein the at least one suggested storage location includes stored content items that have a similarity to the first content item.
32. The system of item 31, wherein the instructions further configure the system to:
   prior to receiving the command to save the first content item, evaluate storage locations of the stored content items to determine a respective semantic similarity that defines a respective storage location of the storage locations.
33. The system of item 32, wherein the evaluating the storage locations of the stored content items is performed by the instructions effective to configure the system to:
   create individual embeddings for the stored content items and locating them in an embedding space;
   for a particular storage location, identify the respective stored content items in the embedding space that are stored in the particular storage location; and
   determine a centroid for a cluster made up of the stored content items that are stored in the particular storage location.
34. The system of item 33, wherein the instructions further configure the system to:
   determine that an average distance from the centroid to respective individual embedding for the stored content items that are stored in the particular storage location is less than a threshold, wherein when the average distance is less than the threshold, the storage location is deemed to contain the stored content items based on the semantic similarity among the stored content items.
35. The system of any one of items 33-34, wherein the instructions further configure the system to:
   prior to creating the individual embeddings, download a preview version of the stored content items from which to create the individual embeddings.
36. The system of any one of items 33-35, wherein the instructions further configure the system to:
   determine that an average distance from the centroid to respective individual embedding for the stored content items that are stored in the particular storage location is greater than a threshold, wherein when the average distance is greater than the threshold, the storage location is deemed to be a unit of organization based on an theme other than semantic similarity.
37. A non-transitory computer-readable storage medium, comprising instructions that when executed, cause at least one processor to:
   receive a command to save a first content item;
   suggest at least one suggested storage location in which to save the first content item; and
   save the first content item in the at least one suggested storage location, wherein the at least one suggested storage location includes stored content items that have a similarity to the first content item.
38. The non-transitory computer-readable storage medium of item 37, wherein the evaluating the storage locations of the stored content items is performed by the at least one processor comprising:
   create individual embeddings for the stored content items and locating them in an embedding space;
   for a particular storage location, identify the respective stored content items in the embedding space that are stored in the particular storage location; and
   determine a centroid for a cluster made up of the stored content items that are stored in the particular storage location.
39. The non-transitory computer-readable storage medium of item 38, wherein the instructions further configure the at least one processor to:
   determine that an average distance from the centroid to respective individual embedding for the stored content items that are stored in the particular storage location is less than a threshold, wherein when the average distance is less than the threshold, the storage location is deemed to contain the stored content items based on a semantic similarity among the stored content items.
40. The non-transitory computer-readable storage medium of any one of items 37-39, wherein the at least one suggested storage location is identified from multiple candidate suggested storage locations, wherein a bookmark folder receive a first weight value, and a reading list folder receives a second weight value that is less the first weight value, whereby the bookmarks folder is preferred over the reading list folder.

## Claims

1. A method, comprising:
displaying a grouping of interface elements in a user interface panel, wherein the interface elements are visual representations for respective content items, wherein the grouping of interface elements is based on a semantic similarity among the respective content items in the grouping of interface elements and a source relationship between at least a pair of the respective content items in the grouping of interface elements.

2. The method of claim 1, further comprising:
receiving a request to display a first content item;
processing information about the first content item and other open content items to determine that the first content item has the semantic similarity among the respective content items in the grouping of interface elements; and
adding the first content item to the grouping of interface elements.

3. The method of any one of claims 1-2, further comprising:
prior to displaying the grouping of interface elements in the user interface panel, receiving a selection of an option to review the respective content items and create the grouping of interface elements.

4. The method of any one of claims 1-3, wherein the grouping of interface elements is an expandable user interface container, wherein the grouping of interface elements is displayed in a collapsed state until selected, and wherein while in the collapsed state, the grouping of interface elements is represented by a title of the grouping of interface elements.

5. The method of claim 4, wherein while the grouping of interface elements is in an expanded state, interface elements within the grouping of interface elements are individually visible, and wherein while a first grouping of interface elements is in the expanded state, a second grouping of interface elements is in the collapsed state.

6. The method of any one of claims 1-5, wherein the grouping of interface elements is created by the method comprising:
creating individual embeddings for the respective content items and locating the individual embeddings in an embedding space;
defining a first cluster from content items located within a threshold measurement from a centroid identified by a clustering algorithm; and
representing, within the grouping of interface elements, a second content item with a first interface element based on the second content item being located within the first cluster.

7. The method of claim 6, wherein the grouping of interface elements is created by the method comprising:
displaying the second content item;
receiving an interaction with the second content item that causes a third content item to be opened, wherein the second content item and the third content item have the source relationship resulting from the second content item being a source of the third content item; and
representing, within the grouping of interface elements, the second content item with the first interface element and the third content item with a second interface element.

8. The method of claim 7, wherein the grouping of interface elements is created by the method comprising:
creating a source relationship embedding for the source relationship and locating the source relationship embedding in the embedding space with the individual embeddings for the respective content items, wherein the centroid is identified by the clustering algorithm by taking into account embeddings of source relationships and the respective content items in the embedding space.

9. The method of any one of claims 7-8, further comprising:
displaying at least one subsequent interface element associated with an n^{th} content item in the user interface panel, wherein the n^{th} content item is located outside the threshold measurement from the centroid, and wherein the at least one subsequent interface element is not within the grouping of interface elements; and
in accordance with a determination that the third content item and the n^{th} content item are located in a second cluster that is distinct from the first cluster on which the grouping of interface elements is based, maintaining the second interface element within the grouping of interface elements despite the third content item being located in the second cluster.

10. The method of any one of claims 6-9, further comprising:
sending a prompt to a language model to name the grouping of interface elements, wherein the prompt includes at least some data from the respective content items to be included in the grouping of interface elements.

11. The method of any one of claims 1-10, further comprising:
receiving, from a server, limited information about content items open on a second client device, wherein the limited information includes an identification of a respective grouping of interface elements on the second client device to which the content items open on the second client device belong; and
presenting the respective grouping of interface elements with the grouping of interface elements.

12. A computer system comprising:
at least one processor; and
a memory storing instructions that, when executed by the at least one processor, cause the computer system to perform the method of any one of claims 1-11.

13. A computer-readable storage medium comprising instructions that, when executed by at least one processor of a computer system, cause the computer system to perform the method of any one of claims 1-11.
